# EUROPÄISCHE PATENTSCHRIFT

(11) **EP 2 726 414 B1**
(45) Veröffentlichungstag und Bekanntmachung des Hinweises auf die Patenterteilung: **22.03.2017**
(21) Anmeldenummer: 12735249.0
(22) Anmeldetag: 29.06.2012
(51) Int. Cl.: C01C 1/08, B01D 53/56, B01D 53/90, B01D 53/92, B01D 53/94, B01J 8/04, C01C 1/04, F01N 3/20

(54) **AMMONIAKGASGENERATOR SOWIE VERFAHREN ZUR ERZEUGUNG VON AMMONIAK ZUR REDUZIERUNG VON STICKOXIDEN IN ABGASEN**
AMMONIA GAS GENERATOR AND METHOD FOR PRODUCING AMMONIA IN ORDER TO REDUCE NITROGEN OXIDES IN EXHAUST GASES
GÉNÉRATEUR DE GAZ AMMONIAC ET PROCÉDÉ POUR PRODUIRE DE L'AMMONIAC POUR LA RÉDUCTION D'OXYDES D'AZOTE DANS DES GAZ DE COMBUSTION

(30) Priorität: 01.07.2011 DE 102011106233; 01.07.2011 DE 102011106243; 01.07.2011 DE 102011106237
(43) Veröffentlichungstag der Anmeldung: 07.05.2014
(73) Patentinhaber: AlzChem AG, 83308 Trostberg (DE)
(72) Erfinder: GERHART, Christian, 83313 Siegsdorf (DE); SATTELMAYER, Thomas, 85435 Erding (DE); TOSHEV, Plamen, 86153 Augsburg (DE)
(74) Vertreter: Weickmann & Weickmann PartmbB
(86) Internationale Anmeldenummer: PCT/EP2012/062750
(87) Internationale Veröffentlichungsnummer: WO 2013/004629

(56) Entgegenhaltungen:
- EP-A2- 1 481 719
- WO-A1-2008/077587
- DE-A1- 4 203 807
- JP-A- 2006 170 013
- JP-A- 2008 267 269
- JP-A- 2009 062 860

## Beschreibung

Die vorliegende Erfindung betrifft einen Ammoniakgasgenerator zur Erzeugung von Ammoniak aus einer Ammoniakvorläufersubstanz und ein Verfahren zur Herstellung von Ammoniakgas sowie deren Verwendung in Abgasnachbehandlungssystemen zur Reduktion von Stickoxiden in Abgasen.

In Abgasen von Verbrennungskraftmaschinen sind oftmals Stoffe enthalten, deren Emission in die Umwelt unerwünscht ist. Daher werden in vielen Ländern Grenzwerte für die Emission solcher Schadstoffe, wie beispielsweise im Abgas von Industrieanlagen oder Automobilen festgelegt, die einzuhalten sind. Zu diesen Schadstoffen zählen neben einer Reihe anderer Schadstoffe auch Stickoxide (NOₓ), wie insbesondere Stickstoffmonoxid (NO) oder Stickstoffdioxid (NO₂).

Die Reduzierung der Emission dieser Stickoxide aus Abgasen von Verbrennungsmotoren kann auf verschiedene Art und Weise erfolgen. Hervorzuheben ist an dieser Stelle die Reduktion durch zusätzliche Abgasnachbehandlungsmaßnahmen, die insbesondere auf die selektive katalytische Reduktion (selective catalytic reduction - SCR) zurückgreifen. Diesen Methoden ist gemeinsam, dass ein selektiv auf die Stickoxide wirkendes Reduktionsmittel dem Abgas zugegeben wird, worauf in Gegenwart eines entsprechenden Katalysators (SCR-Katalysator) eine Umwandlung der Stickoxide erfolgt. Hierbei werden die Stickoxide in weniger umweltschädliche Stoffe, wie beispielsweise Stickstoff und Wasser umgewandelt.

Ein heute bereits eingesetztes Reduktionsmittel für Stickoxide stellt Harnstoff (H₂N-CO-NH₂) dar, welches in Form einer wässrigen Harnstofflösung dem Abgas zugegeben wird. Dabei kann sich der Harnstoff im Abgasstrom in Ammoniak (NH₃) zersetzen, beispielsweise durch Einwirkung von Wärme (Thermolyse) und/ oder durch Reaktion mit Wasser (Hydrolyse). Der somit gebildete Ammoniak stellt das eigentliche Reduktionsmittel für Stickoxide dar.

Die Entwicklung von Abgasnachbehandlungssystemen für Automobile wird seit geraumer Zeit betrieben und ist Gegenstand zahlreicher Publikationen. So wird beispielsweise mit der europäischen Patentschrift EP 487 886 B1 ein Verfahren zur selektiven katalytischen NO_{X}-Reduktion in sauerstoffhaltigen Abgasen von Dieselmotoren beschrieben, in dem Harnstoff und dessen Thermolyseprodukte als Reduktionsmittel eingesetzt werden. Zudem wird eine Vorrichtung zur Erzeugung vom Ammoniak in Form eines Röhrenverdampfers beschrieben, die eine Sprühvorrichtung, einen Verdampfer mit Verdampferrohre und einen Hydrolysekatalysator umfasst.

Des Weiteren wird mit der Europäischen Patentschrift EP 1 052 009 B1 ein Verfahren und eine Vorrichtung zur Durchführung des Verfahrens zur thermischen Hydrolyse und Dosierung von Harnstoff bzw. Harnstofflösungen in einem Reaktor unter Zuhilfenahme eines Abgasteilstroms beschrieben. In dem Verfahren wird einem Abgasstrang stromauf des SCR-Katalysators ein Teilstrom des Abgases entnommen und durch den Reaktor geleitet, wobei der nach der Hydrolyse im Reaktor mit Ammoniak beladene Teilstrom ebenfalls noch stromauf des SCR-Katalysators wieder in den Abgasstrang zurückgeführt wird.

Zudem wird mit der europäischen Patentschrift EP 1 338 562 B1 eine Vorrichtung und Verfahren beschrieben, welches die katalytische Reduktion von Stickoxiden durch Ammoniak nutzt. Der Ammoniak wird hierbei unter Bedingungen der Blitzthermolyse aus Harnstoff in fester Form sowie der Hydrolyse aus Isocyansäure gewonnen und dem Abgasstrom eines Fahrzeuges zugeleitet.

Des Weiteren wird mit der europäischen Patentanmeldung EP 1 348 840 A1 eine Abgasreinigungsanlage als eine als Ganzes transportable Baueinheit in Form eines 20-Fuß-Containers beschrieben. Die Anlage wird derart betrieben, dass eine Harnstoff- oder Ammoniaklösung direkt mittels einer Eindüseinrichtung in den Abgasstrom eingedüst wird. Die Reduktion der in dem Abgas enthaltenden Stickoxide erfolgt an einem SCR-Katalysator.

Weiterhin wird mit der deutschen Patentanmeldung DE 10 2006 023 147 A1 eine Vorrichtung zur Erzeugung von Ammoniak beschrieben, die Teil eines Abgasnachbehandlungssystems ist.

Zudem wird weiterhin mit den internationale Anmeldung WO 2008/ 077 587 A1 und WO 2008/ 077 588 A1 ein Verfahren zur selektiven katalytischen Reduktion von Stickoxiden in Abgasen von Fahrzeugen mittels wässrigen Guanidiniumsalzlösungen beschrieben. In diesen Verfahren wird ein Reaktor eingesetzt, der aus den wässrigen Guanidiniumsalzlösungen Ammoniak erzeugt.

JP 2009-062860 und JP 2008-267269 beschreiben Abgasnachbehandlungssysteme umfassend eine Vorrichtung zur Herstellung von Ammoniak durch thermische Zersetzung von Harnstoff, welche eine Reaktorkammer, die mit einer Sprühdüse für eine wässrige Harnstofflösung und einem Hydrolysekatalysator versehen ist, umfasst.

EP 1 481 719 beschreibt ein Abgasnachbehandlungssystem, das eine Vorrichtung zur Herstellung von Ammoniak durch thermische Zersetzung von Harnstoff umfasst, umfassend eine Reaktorkammer, die mit einer Sprühdüse für eine wässrige Harnstofflösung und einem Katalysator für die Zersetzung von Harnstoff versehen ist, wobei ein Teilstrom eines Abgases als Trägergas für die Harnstofflösung verwendet wird.

DE 42 03 807 beschreibt eine Vorrichtung zur katalytischen Reduktion von NOₓ aus sauerstoffhaltigen Abgasen unter Anwendung von Harnstoff umfassend einen Hydrolysekatalysator, der aus feinen Strömungskanälen besteht, die durch Umlenkungen und Durchbrüche bzw. Schlitze Teilströmungen zulassen, die annähernd senkrecht zur Hauptströmung gerichtet sind, um eine gleichmäßige Verteilung der Harnstofflösung sowie eine sehr rasche Aufheizung der Lösung zu bewirken.

Auch wenn Ammoniakgasgeneratoren seit geraumer Zeit bekannt sind, so ist dennoch bis heute keine Realisierung der Technik in einem Fahrzeug oder einer anderen Verwendung verwirklicht worden. Bis heute wurde das Konzept der Direkteinspritzung einer Ammoniakvorläufersubstanz in den Abgasstrom einer Brennkraftmaschine verfolgt, wobei diese Ammoniakvorläufersubstanz durch geeignete Maßnahmen im Abgasstrang in das eigentliche Reduktionsmittel zerfällt. Aufgrund von unvollständiger Zersetzung oder Nebenreaktionen von Zersetzungsprodukten im Abgasstrang werden jedoch immer wieder Ablagerungen beobachten, die zur Beeinträchtigung der im Abgasstrang weiterhin vorhandenen Katalysatoren und Filter führen.

Daher liegt der vorliegenden Erfindung die Aufgabe zugrunde einen Ammoniakgasgenerator und ein Verfahren zur Herstellung von Ammoniak bereitzustellen, der diese Nachteile des Standes der Technik überwindet. Der vorliegenden Erfindung liegt weiterhin die Aufgabe zugrunde einen Ammoniakgasgenerator bereitzustellen, der einen einfachen Aufbau aufweist sowie eine hohe Umsatzrate von Ammoniakvorläufersubstanzen in Ammoniakgas bereitstellt und einen langen Einsatz ohne Wartung erlaubt. Zudem soll der Ammoniakgasgenerator universell einsetzbar sein, wobei insbesondere auch verschiedenartige Ammoniakvorläufersubstanzen zum Einsatz gebracht werden können. Weiterhin soll das Verfahren zur Erzeugung von Ammoniak mittels einfacher apparativer Maßnahmen durchgeführt werden können, eine hohe Umsatzrate von Ammoniakvorläufersubstanzen in Ammoniakgas bereitstellen sowie einen langen Einsatz ohne Wartung erlauben.

Diese Aufgaben werden gelöst durch einen Ammoniakgasgenerator gemäß Anspruch 1 und durch ein Verfahren zur Erzeugung von Ammoniak aus einer Lösung einer Ammoniakvorläufersubstanz mittels eines Ammoniakgasgenerators gemäß Anspruch 9. Damit ist gemäß einer ersten Ausführung ein Ammoniakgasgenerator zur Erzeugung von Ammoniak aus einer Lösung einer Ammoniakvorläufersubstanz Gegenstand der vorliegenden Erfindung, der eine Katalysatoreinheit umfasst, wobei die Katalysatoreinheit ihrerseits einen Katalysator zur Zersetzung und/ oder Hydrolyse von Ammoniakvorläufersubstanzen in Ammoniak und eine dem Katalysator in Strömungsrichtung vorgelagerte Mischkammer umfasst und der Katalysator ein Katalysatorvolumen V_{Kat} und die Mischkammer ein Mischkammervolumen V_{Misch} aufweist. Des Weiteren umfasst der Ammoniakgasgenerator eine Eindüsungsvorrichtung zur Einbringung einer Lösung der Ammoniakvorläufersubstanz in die Mischkammer und einen Auslass für das gebildete Ammoniakgas, wobei der Ammoniakgasgenerator einen Einlass für ein Trägergas umfasst, der einen tangentialen Trägergasstrom in Bezug auf die in die Mischkammer eingedüste Lösung erzeugt. Der Ammoniakgasgenerator ist dadurch gekennzeichnet, dass die Katalysatoreinheit einen mindestens zweigeteilten Hydrolysekatalysator umfasst, dessen in Strömungsrichtung erster Teil in Form eines beheizten Katalysators ausgebildet ist, während der zweite Teil in Form eines nicht beheizten Katalysators ausgeführt ist, oder dass hintereinander zwei Hydrolysekatalysatoren angeordnet sind, wobei es sich bei dem ersten Hydrolysekatalysator um einen beheizten Katalysator und bei dem zweiten Hydrolysekatalysator um einen nicht beheizten Katalysator handelt.

Hervorzuheben ist an dieser Stelle, dass ein Ammoniakgasgenerator gemäß der vorliegenden Erfindung eine separate Baueinheit zur Erzeugung von Ammoniak aus Ammoniakvorläufersubstanzen ist. Eine solche Baueinheit kann beispielsweise zur Reduktion von Stickoxiden in Industrieabgasen oder zur Abgasnachbehandlung von Abgasen aus Verbrennungsmotoren, wie beispielsweise Dieselmotoren eingesetzt werden. Dieser Ammoniakgasgenerator kann autark arbeiten oder auch mit Hilfe von Abgasseitenströmen betrieben werden, wobei jedoch in jedem Fall erst in einem nachfolgenden Prozessschritt eine Reduzierung von Stickoxiden mittels Ammoniak stattfindet. Falls ein erfindungsgemäßer Ammoniakgasgenerator als separates Bauteil in einer Abgasnachbehandlungsanlage eines Verbrennungsmotors, beispielsweise eines Dieselmotors verwendet wird, kann somit eine Reduzierung der Stickoxide im Abgasstrom vorgenommen werden, ohne weitere Katalysatoren zur Spaltung von Ammoniakvorläufersubstanzen oder andere Bauteile in den Abgasstrom selbst einzubringen. Der mit dem erfindungsgemäßen Ammoniakgasgenerator erzeugte Ammoniak kann somit bedarfsgerecht in den Abgasstrom eingeleitet werden. Eine eventuelle Verkürzung der Lebensdauer des SCR-Katalysators durch Verunreinigungen in Form von Ablagerungen aus beispielsweise Ammoniakvorläufersubstanzen oder Produkten der Spaltung von Ammoniakvorläufersubstanzen wird ebenfalls vermieden.

Erfindungsgemäß wird somit nicht eine Ammoniakvorläufersubstanz einem Abgasstrom zugeführt, wobei aus der Ammoniakvorläufersubstanz in situ dann Ammoniak gebildet wird, welcher im Abgasstrom als Reduktionsmittel wirkt. Vielmehr wird erfindungsgemäß dem Abgasstrom Ammoniak zugeführt, welcher zuvor in einer separaten Einheit, nämlich dem erfindungsgemäßen Ammoniakgasgenerator, gebildet worden ist. Erfindungsgemäß wird somit insbesondere zunächst in einem Ammoniakgasgenerator als separater Baueinheit aus einer Ammoniakvorläufersubstanz Ammoniak erzeugt. Dieser Ammoniak, und nicht die Ammoniakvorläufersubstanz, wird dann in einen Abgasstrom eingeleitet, insbesondere um dort eine Reduzierung von Stickoxiden zu bewirken.

Die Zuführung des Ammoniaks erfolgt erfindungsgemäß bevorzugt vor einem SCR-Katalysator, welcher sich im Abgasstrom befindet. Weiterhin bevorzugt erfolgt die Zuführung des Ammoniaks nach dem Verbrennungsmotor. In einer weiteren bevorzugten Ausführungsform erfolgt die Zuführung des Ammoniaks nach einem im Abgasstrom befindlichen Oxidationskatalysator.

Erfindungswesentlich ist hierbei, dass der Ammoniakgasgenerator einen Einlass für ein Trägergas umfasst, der einen tangentialen Trägergasstrom in Bezug auf die in die Mischkammer eingedüste Lösung erzeugt.

Der Einlass für das Trägergas befindet sich vorzugsweise in der Mischkammer.

Überraschenderweise hat sich herausgestellt, dass durch den tangentialen Trägergasstrom (nachfolgend synonym auch Transportgasstrom) Ablagerungen an den Wandungen der Katalysatoreinheit im Bereich der Mischkammer unterbunden werden können und eine dauerhaft gute Durchmischung von Trägergas (nachfolgend synonym auch Transportgas) und Lösung der Ammoniakvorläufersubstanz bereitgestellt werden kann. Wird ein solcher tangentialer Trägergasstrom nicht eingesetzt, so können durch das Versprühen der Lösungen von Ammoniakvorläufersubstanz in die Mischkammer ein Benetzen der Wandung der Katalysatoreinheit im Bereich der Mischkammer erfolgen und unerwünschte Nebenreaktionen wie beispielsweise eine Polymerisation der Ammoniakvorläufersubstanz erfolgen. Diese Nebenreaktionen führen zu unerwünschten Ablagerungen im Bereich der Mischkammer, wodurch eine für die Funktion des Generators außerordentlich wichtige Durchmischung von Trägergas und Lösung der Ammoniakvorläufersubstanz dauerhaft nicht weiter ermöglicht ist. Aufgrund der mangelhaften Durchmischung des Trägergases mit der Lösung sind zudem weitere Ablagerungen im und am Katalysator selbst zu beobachten. Durch den tangentialen Trägergasstrom wird eine Wirbelschleierströmung mit den Tröpfchen erzeugt, die axial in Richtung des Hydrolysekatalysators auf die Hydrolysekatalysatorstirnfläche geführt wird. Diese Wirbelschleierströmung ermöglicht eine sehr gute Umsetzung zum Ammoniak am Katalysator.

Die tangentiale Zuführung des Trägergases erfolgt im Kopfbereich des Generators, vorzugsweise in Höhe der Sprüheinrichtung der Ammoniakvorläuferlösung in die Katalysatoreinheit bzw. in die Mischkammer. Dabei wird der Gasstrom möglichst flach an der Wandung der Mischkammer in der Art eingeleitet, dass sich eine abwärtsgerichtete Wirbelströmung in der Katalysatoreinheit in Richtung Katalysatorstirnfläche einstellt.

Das Trägergas und insbesondere der tangentialer Trägergasstrom, wird vorzugsweise mit einer Temperatur von bis zu 550 °C, bevorzugt mit einer Temperatur von 250 bis 550 °C, weiterhin bevorzugt mit einer Temperatur von 250 bis 400 °C und ganz besonders bevorzugt mit einer Temperatur von 300 bis 350 °C in die Mischkammer eingeführt.

Idealerweise, d.h. um einen Umsatz der Ammoniakvorläufersubstanz in Ammoniak von mehr als 95 % zu erreichen und eine Berührung der Vorläufersubstanz mit der Generatorwand zu vermeiden, werden bei der Eindosierung vorzugsweise einige entscheidende Bedingungen eingehalten. Bevorzugt ist eine Eindüsung der Ammoniakvorläufersubstanz in die Mischkammer in der Art, dass bei gegebener Katalysatorstirnfläche der Spraykegeldurchmesser beim Auftreffen auf die Katalysatorstirnfläche höchstens 98 %, vorzugsweise höchstens 95 % des Katalysatordurchmessers beträgt. Dagegen beträgt der Spraykegeldurchmesser bevorzugt mindestens 80 %, vorzugsweise mindestens 83 % des Katalysatorstirnflächendurchmessers, um eine zu hohe Konzentration bei gegebener Fläche und damit eine zu hohe Stirnflächenbelastung mit Vorläufersubstanz zu vermeiden. Eine zu hohe Belastung der Katalysatorstirnfläche führt zu einem ungenügenden Kontakt zum Katalysator und zu einer zu starken Abkühlung durch die verdampfende Flüssigkeit und damit ebenfalls zu einer unvollständigen Umsetzung und zu unerwünschten Nebenreaktionen verbunden mit Ablagerungen. Idealerweise ergeben sich daher bevorzugt einzuhaltende Kombinationen aus einem tangentialen Trägergasstrom mit weiteren Parametern, die durch die Eindüsungsvorrichtung vorgegeben werden. In diesem Zusammenhang ist insbesondere die Art der zu verwendenden Eindüsungsvorrichtung, wie auch der Abstand der Öffnung der Eindüsungsvorrichtung zur gegebenen Katalysatorstirnfläche zu nennen.

Im Zusammenhang mit der vorliegenden Erfindung soll unter einer Eindüsungsvorrichtung jedwede Vorrichtung verstanden sein, die eine Lösung, vorzugsweise eine wässrige Lösung, einer Ammoniakvorläufersubstanz versprüht, vernebelt oder anderweitig zu Tropfen ausbildet, wobei die Lösung der Ammoniakvorläufersubstanz in Form von Tropfen ausgebildet wird, die insbesondere einen Tröpfchendurchmesser d₃₂ von kleiner als 25 µm aufweisen. Der Tropfendurchmesser d₃₂ bezieht sich im Zusammenhang mit der vorliegenden Erfindung auf den Sauterdurchmesser entsprechend der Deutschen Industrienorm DIN 66 141.

Damit ist gemäß einer bevorzugten Ausführung der vorliegenden Erfindung vorgesehen, dass die Eindüsungsvorrichtung ihrerseits eine Düse umfasst, die Tröpfchen mit einem Tröpfchendurchmesser d₃₂ von kleiner als 25 µm erzeugt. Gemäß der vorliegenden Erfindung ist hierbei weiterhin bevorzugt vorgesehen, dass die Düse Tröpfchen mit einem Tröpfchendurchmesser d₃₂ von kleiner als 20 µm und ganz besonders bevorzugt von kleiner als 15 µm erzeugt. Gleichzeitig oder unabhängig hiervon ist weiterhin bevorzugt, dass die Düse Tröpfchen mit einem Tröpfchendurchmesser d₃₂ von größer als 0,1 µm und insbesondere von größer als 1 µm erzeugt. Auch durch die Verwendung von solchen Düsen kann ein Ammoniakbildungsgrad AG von > 95 % (siehe oben) erreicht werden. Zudem kann eine besonders gleichmäßige Verteilung der Lösung auf die Katalysatorstirnfläche erfolgen. Der Ammoniakbildungsgrad AG ist hierbei und im Folgenden definiert als die im Verfahren erzeugte Molmenge NH₃ bezogen auf die theoretisch bei vollständiger Hydrolyse der Ammoniakvorläufersubstanz zu erzeugende Molmenge an Ammoniak. Ein Ammoniakbildungsgrad von >95 % wird gemäß der vorliegenden Erfindung als vollständige Umsetzung betrachtet.

Gemäß einer besonders bevorzugten Variante kann insbesondere vorgesehen sein, dass die Eindüsungsvorrichtung ihrerseits eine Düse umfasst, die gemäß der vorliegenden Erfindung eine sogenannte Zweistoffdüse ist. Unter einer Zweistoffdüse wird hierbei eine Düse verstanden, die als Treibmittel ein unter Druck stehendes Gas, im Allgemeinen Luft, zum Oberflächenaufbruch der flüssigen Phase und damit zur Tröpfchenbildung verwendet. Dies unter Druck stehende Gas wird auch als Zerstäubungsluft bezeichnet. Diese Art der Düse ermöglicht eine besonders feine Verteilung der Ammoniakvorläufersubstanz und Tröpfchendurchmesser d₃₂ von kleiner als 25 µm, insbesondere von kleiner als 20 µm.

Das Treibmittel, insbesondere die Zerstäubungsluft wird dabei vorzugsweise zusammen mit der Lösung der Ammoniakvorläufersubstanz durch die gleiche Düsenöffnung in die Mischkammer eingebracht.

Unabhängig oder gleichzeitig kann die Eindüsungsvorrichtung auch mindestens zwei Düsen zur Einbringung der Ammoniakvorläufersubstanz in die Mischkammer aufweisen, die insbesondere zugleich oder separat voneinander schaltbar sind.

Alternativ kann jedoch auch vorgesehen sein, dass die Eindüsungsvorrichtung einen sogenannten Flash-Verdampfer umfasst.

Der Spraykegel gemäß der vorliegenden Erfindung ist derjenige Kegel der zu versprühenden Lösung, der mittels einer Düse oder mehreren Düsen mit definierten Sprühwinkel α erzeugt werden kann, wobei der Spraykegeldurchmesser derjenige Durchmesser ist, der bei Auftritt der Tröpfchen auf die Katalysatorstirnfläche erhalten wird. Dieser stellt sich aus dem Flüssigkeitsdruck von 0,1 bis 10 bar auf die zu versprühende Lösung bei 25 °C und gegebenenfalls der Zerstäubungsluft im Betriebsbereich von 0,5 bis 10 bar (bei Zweistoffdüsen) unter Verwendung von Trägergas ein.

Um einen Spraykegeldurchmesser von höchstens 98 % des Katalysatordurchmessers zu erreichen, kann gemäß einer Weiterbildung der vorliegenden Erfindung auch vorgesehen werden, dass die Eindüsungsvorrichtung ihrerseits mindestens eine Düse umfasst, insbesondere eine Zweistoffdüse, die einen theoretischen Sprühwinkel α von 10 ° bis 90 ° aufweist. Insbesondere kann gleichzeitig oder unabhängig hiervon vorgesehen sein, dass der Abstand der Düsenöffnung zur Stirnfläche des Katalysators von 15 bis 2.000 mm beträgt.

Besonders bevorzugt ist eine Düse, insbesondere eine Zweistoffdüse, die einen theoretischen Sprühwinkel α von mindestens 10 °, insbesondere mindestens 20 °, insbesondere mindestens 25 °, besonders bevorzugt von mindestens 30 °, besonders bevorzugt von mindestens 35 °, besonders bevorzugt von mindestens 40 ° und ganz besonders bevorzugt von mindestens 45 °aufweist. Gleichzeitig oder unabhängig hiervon sind weiterhin solche Düsen bevorzugt, die einen theoretischen Sprühwinkel α von höchstens 90 °, insbesondere von höchstens 80 °, insbesondere von höchstens 75 °, insbesondere von höchstens 70 °, besonders bevorzugt von höchstens 65 °, besonders bevorzugt von höchstens 60 °, besonders bevorzugt von höchstens 55 ° und ganz besonders bevorzugt von höchstens 50 °aufweisen. Wie bereits ausgeführt, kann durch den gezielten Einsatz einer Düse mit einem definierten Sprühwinkel α eine gleichmäßige Verteilung der einzusprühenden Lösung erreicht werden, ohne dass es zu Ablagerungen an den Wänden oder der Katalysatorstirnfläche kommt.

Als theoretischer Sprühwinkel α (nachfolgend auch Sprühwinkel α genannt) gemäß der vorliegenden Erfindung soll ein solcher Sprühwinkel verstanden sein, der sich bei einem Betriebsdruck von 0,1 bis 10 bar auf die zu versprühende Lösung bei 25 °C und gegebenenfalls der Zerstäubungsluft im Betriebsbereich von 0,5 bis 10 bar (bei Zweistoffdüsen) am Austritt der Düsenöffnung oder der Düsenöffnungen einstellt, ohne dass ein Trägergas oder irgendeine sonstige Beeinflussung der versprühten Lösung vorhanden ist.

Ein ähnlicher Effekt wird erzeugt, wenn eine Düse verwendet wird, die eine erste Anzahl an Düsenöffnungen zur Einbringung der Lösung der Ammoniakvorläufersubstanz in die Katalysatoreinheit aufweist, die von einer zweiten Anzahl an Düsenöffnungen zur Einbringung eines Trägergases oder Zerstäubungsluft in die Katalysatoreinheit ringförmig umgeben ist.

Alternativ kann deshalb auch vorgesehen sein, dass um die Düse herum mindestens ein Einlass für Trägergas vorgesehen ist, der derart ausgebildet ist, dass das Trägergas einen Mantel um die in die Mischkammer eingebrachte Lösung bildet. Somit wird die eingesprühte Lösung mit einem Mantel aus Trägergas eingehüllt, so dass keine Benetzung der Innenwand beobachtet wird.

In einer weiteren Ausführungsform betrifft die Erfindung deshalb einen Ammoniakgasgenerator, welcher wenigstens einen Einlass für ein Trägergas umfasst. Der Einlass befindet sich vorzugsweise in der Mischkammer und ist insbesondere separat bzw. getrennt von der Düsenöffnung, durch die die Lösung der Ammoniakvorläufersubstanz eingebracht wird. Das Trägergas kann somit unabhängig von der Ammoniakvorläufersubstanz-Lösung eingebracht werden. Bevorzugt erzeugt der Einlass einen tangentialen oder einen parallelen Trägergasstrom in Bezug auf die in die Mischkammer eingedüste Lösung. Für einen parallelen Trägergasstrom werden vorzugsweise eine oder mehrere Einlassöffnungen für Trägergas in der Wandung, in der sich auch die Eindüsungsvorrichtung zur Einbringung der Lösung der Ammoniakvorläufersubstanz befindet, angeordnet.

Bei der vorliegenden Erfindung ist weiterhin vorgesehen, dass der Abstand der Düsenöffnung zur Stirnfläche des Katalysators insbesondere von 15 bis 1500 mm, besonders bevorzugt von 15 bis 1000 mm und ganz besonders bevorzugt von 15 bis 800 mm aufweisen kann. Unabhängig oder gleichzeitig kann jedoch auch vorgesehen sein, dass der Abstand der Düsenöffnung zur Stirnfläche des Katalysators mindestens 30 mm, bevorzugt mindestens 40 mm, besonders bevorzugt mindestens 50 mm, besonders bevorzugt mindestens 60 mm, besonders bevorzugt mindestens 100 mm und ganz besonders bevorzugt mindestens 300 mm und weiterhin unabhängig oder gleichzeitig höchstens 1500 mm, insbesondere höchstens 1000 mm, insbesondere höchstens 800 mm, insbesondere höchstens 500 mm, insbesondere höchstens 400 mm, besonders bevorzugt höchstens 200 mm und ganz besonders bevorzugt höchstens 150 mm beträgt.

Gemäß einer Weiterbildung der vorliegenden Erfindung ist auch vorgesehen, dass das Verhältnis des Volumens der Mischkammer V_{Misch} zum Volumen des Katalysators V_{Kat} dem Verhältnis von 1,5 : 1 bis 5 : 1 entspricht. Überraschender weise hat sich gezeigt, dass die eingesprühte Ammoniakvorläufersubstanz dann vollständig (Umsatz > 95 %) in Ammoniak zersetzt werden kann, wenn die Tröpfchen der Lösung bereits vor dem Auftreffen auf die Katalysatorstirnfläche teilweise verdampft werden. Dies kann dadurch gewährleistet sein, dass das Volumen der Mischkammer größer ist als das Volumen des Katalysators. Durch ein teilweises Verdampfen der Tröpfchen wird der Lösung bereits genügend Energie zugeführt, so dass ein zu starkes Abkühlen an der Katalysatorstirnfläche durch zu große Tropfen vermieden wird und damit einer schlechteren Zersetzung bzw. Nebenproduktbildung entgegengewirkt wird. Außerdem wird durch ein entsprechendes Mischkammervolumen V_{Misch} sichergestellt, dass die versprühte Ammoniakvorläufersubstanz als Aerosol homogen im Transportgasstrom verteilt über den Querschnitt auf dem Katalysator auftrifft und Spots mit zu hoher Konzentration, was wiederum eine schlechtere Umsetzung zur Folge hätte, vermieden werden. Ganz besonders bevorzugt ist hierbei vorgesehen, dass das Verhältnis des Volumens der Mischkammer V_{Misch} zum Volumen des Katalysators V_{Kat} von 2,5 : 1 bis 5 : 1, besonders bevorzugt 3 : 1 bis 5 : 1 und ganz besonders bevorzugt 3,5 : 1 bis 5 : 1 beträgt.

Das Volumen des Katalysators V_{Kat} beträgt vorzugsweise 50 ml bis 1.000 l. Das Volumen der Mischkammer V_{Misch} beträgt vorzugsweise mindestens 10 ml, bevorzugt mindestens 50 ml, weiterhin bevorzugt mindestens 100 ml, weiterhin bevorzugt mindestens 200 ml, weiterhin bevorzugt mindestens 1.000 ml, weiterhin bevorzugt mindestens 2.000 ml und weiterhin bevorzugt mindestens 5.000 ml. Gleichzeitig oder unabhängig hiervon beträgt das Volumen der Mischkammer V_{Misch} bevorzugt höchstens 2,5 l, weiterhin bevorzugt höchstens 10 I, weiterhin bevorzugt höchstens 80 l, weiterhin bevorzugt höchstens 500 I, weiterhin bevorzugt höchstens 1.200 l und weiterhin bevorzugt höchstens 2.000 l.

Des Weiteren soll unter einer Katalysatoreinheit gemäß der vorliegenden Erfindung eine Baueinheit verstanden sein, die ein Gehäuse zur Aufnahme eines Katalysators, eine in Strömungsrichtung dem Katalysator vorgelagerte Mischkammer und mindestens einen Katalysator zur Zersetzung und/ oder Hydrolyse von Ammoniakvorläufersubstanzen in Ammoniak umfasst, wobei der Katalysator ein Katalysatorvolumen V_{Kat} und die Mischkammer ein Mischkammervolumen V_{Misch} aufweist. Gegebenenfalls kann die Katalysatoreinheit zusätzlich eine dem Katalysator in Strömungsrichtung nachgelagerte Auslasskammer zum Auslass des gebildeten Ammoniakgases umfassen.

Als Katalysator zur Zersetzung und/ oder Hydrolyse von Ammoniakvorläufersubstanzen kann im Rahmen der vorliegenden Erfindung jeder Katalysator verwendet werden, der die Freisetzung von Ammoniak aus der Vorläufersubstanz unter katalytischen Bedingungen ermöglicht. Ein bevorzugter Katalysator hydrolisiert die Ammoniakvorläufersubstanz zu Ammoniak und weiteren unschädlichen Stoffen wie Stickstoff und Kohlendioxid und Wasser. Bevorzugt handelt es sich bei dem Katalysator somit um einen Hydrolysekatalysator.

Wird beispielsweise eine Guanidiniumsalz-Lösung, insbesondere eine Guanidiniumformiat-Lösung, eine Harnstoff-Lösung oder Mischungen hiervon verwendet, so kann die katalytische Zersetzung zu Ammoniak in Gegenwart von katalytisch aktiven, nicht oxidationsaktiven Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, insbesondere Eisenzeolithen vom ZSM 5- oder BEA-Typ, vorgenommen werden. Als Metalle kommen hierbei insbesondere die Nebengruppen-Elemente und vorzugsweise Eisen oder Kupfer in Frage. Die Metalloxide wie Titanoxid, Aluminiumoxid sowie Siliciumdioxid werden vorzugsweise auf metallischen Trägermaterialien wie z. B. Heizleiter-Legierungen (insbesondere Chrom-Aluminium-Stähle) aufgebracht.

Besonders bevorzugte Katalysatoren sind Hydrolysekatalysatoren, die insbesondere katalytisch aktive Beschichtungen aus Titandioxid, Aluminiumoxid und Siliciumdioxid sowie deren Mischungen hiervon umfassen.

Alternativ kann die katalytische Zersetzung der Guanidiniumformiat-Lösungen bzw. der übrigen Komponenten auch zu Ammoniak und Kohlendioxid erfolgen, wobei katalytisch aktive Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, eingesetzt werden, die mit Gold und/oder Palladium als oxidationsaktive Komponenten imprägniert sind. Die entsprechenden Katalysatoren mit Palladium und/oder Gold als Aktivkomponenten weisen vorzugsweise einen Edelmetallgehalt von 0,001 bis 2 Gew.-%, insbesondere 0,01 bis 1 Gew.-% auf. Mit Hilfe derartiger Oxidationskatalysatoren ist es möglich, die unerwünschte Bildung von Kohlenmonoxid als Nebenprodukt bei der Zersetzung des Guanidiniumsalzes bereits bei der Ammoniakerzeugung zu vermeiden.

Bevorzugt wird für die katalytische Zersetzung des Guanidiniumformiats sowie ggf. den weiteren Komponenten eine katalytische Beschichtung mit Palladium oder/und Gold als Aktivkomponenten mit einem Edelmetallgehalt von 0,001 bis 2 Gew.-%, insbesondere 0,01 bis 1 Gew.-% eingesetzt.

Somit ist auch ein Ammoniakgasgenerator Gegenstand der vorliegenden Erfindung, der einen Katalysator umfasst, der insbesondere ein Hydrolysekatalysator ist, wobei der Katalysator eine katalytisch aktive Beschichtung aufweist, die mit Gold und/ oder Palladium imprägniert ist, insbesondere mit einem Gehalt an Gold und/oder Palladium von 0,001 bis 2 Gew.-% (bezogen auf die katalytische Beschichtung). Weiterhin bevorzugt weist dieser Katalysator eine katalytisch aktive Beschichtung aus Oxiden ausgewählt aus der Gruppe Titandioxid, Aluminiumoxid und Siliciumdioxid sowie deren Mischungen, oder/und hydrothermal stabilen Zeolithen auf, die mit Gold und/oder Palladium imprägniert ist, wobei weiterhin bevorzugt der Gehalt an Gold und/oder Palladium 0,001 bis 2 Gew.-% (bezogen auf die katalytische Beschichtung) beträgt.

Gemäß der Erfindung ist der Ammoniakgasgenerator dadurch gekennzeichnet, dass die Katalysatoreinheit einen mindestens zweigeteilten Hydrolysekatalysator umfasst, dessen in Strömungsrichtung erster Teil in Form eines beheizten Katalysators ausgebildet ist, während der zweite Teil in Form eines nicht beheizten Katalysators ausgeführt ist, oder dass hintereinander zwei Hydrolysekatalysatoren angeordnet sind, wobei es sich bei dem ersten Hydrolysekatalysator um einen beheizten Katalysator und bei dem zweiten Hydrolysekatalysator um einen nicht beheizten Katalysator handelt.

Es ist im Rahmen der vorliegenden Erfindung möglich, dass man einen Hydrolysekatalysator einsetzt, der in Strömungsrichtung aus mindestens zwei Abschnitten besteht, wobei der erste Abschnitt nicht oxidationsaktive Beschichtungen und der zweite Abschnitt oxidationsaktive Beschichtungen enthält. Vorzugsweise besteht 5 bis 90 Vol.-% dieses Katalysators aus nicht oxidationsaktiven Beschichtungen und 10 bis 95 Vol-% aus oxidationsaktiven Beschichtungen. Insbesondere bestehen 15 bis 80 Vol-% dieses Katalysators aus nicht oxidationsaktiven Beschichtungen und 20 bis 85 Vol-% aus oxidationsaktiven Beschichtungen. Alternativ kann man die Hydrolyse auch in Gegenwart von zwei hintereinander angeordneten Katalysatoren durchführen, wobei der erste Katalysator nicht oxidationsaktive Beschichtungen und der zweite Katalysator oxidationsaktive Beschichtungen enthält. Für den Fall, dass es sich um zwei hintereinander angeordnete Katalysatoren handelt, ist der erste Hydrolysekatalysator ein beheizter Katalysator und der zweite Hydrolysekatalysator ein nicht beheizter Katalysator.

Alternativ dazu wird ein Hydrolysekatalysator eingesetzt, der aus mindestens zwei Abschnitten besteht, wobei der in Strömungsrichtung angeordnete erste Abschnitt in Form eines beheizten Katalysators und der in Strömungsrichtung angeordnete zweite Abschnitt in Form eines nicht beheizten Katalysators vorliegt. Vorzugsweise besteht der Katalysator zu 5 bis 50 Vol.-% aus dem ersten Abschnitt und zu 50 bis 95 Vol-% aus dem zweiten Abschnitt.

Gemäß einer besonders bevorzugten Ausführung der vorliegenden Erfindung ist vorgesehen, dass der Ammoniakgasgenerator eine Katalysatoreinheit mit einem mindestens zweigeteilten, besonders bevorzugt mindestens dreigeteilten, Hydrolysekatalysator umfasst, dessen in Strömungsrichtung erster Teil in Form eines beheizten Katalysators, der vorzugsweise eine direkte elektrische Widerstandsheizung und/oder eine Mantelheizung aufweist, ausgebildet ist, während der zweite Teil in Form eines nicht beheizten Katalysators ausgeführt ist, dem ganz besonders bevorzugt stromab als dritter Teil ein nicht beheizter Katalysator mit Mischerstruktur folgt.

Ganz besonders bevorzugt ist ein Ammoniakgasgenerator, der eine Katalysatoreinheit umfasst, dessen Katalysator ein Verhältnis Durchmesser des Katalysators D_{KAT} zur Länge L der Katalysators von 1:1 bis 1:5, insbesondere von 1:2 bis 1:4 und ganz besonders bevorzugt von 1 : 3 aufweist. Der Katalysatordurchmesser D_{KAT} beträgt vorzugsweise 20 bis 2000 mm, insbesondere 30 bis 1000 mm und noch mehr bevorzugt 30 bis 100 mm. Es kann jedoch auch vorgesehen sein, dass der Durchmesser D_{Kat} 30 bis 80 mm, 80 bis 450 mm oder 450 bis 1.000 mm beträgt.

Weiterhin bevorzugt ist hierbei, dass der der Katalysator eine Länge L von 30 mm bis 2000 mm, besonders bevorzugt von 70 mm bis 1000 mm und ganz besonders bevorzugt von 70 mm bis 700 mm aufweist.

Es hat sich ergeben, dass für eine vollständige katalytische Umsetzung der Ammoniakvorläufersubstanzen vorzugsweise Katalysatoren mit einer Katalysatorzellenzahl von mindestens 60 cpsi (cpsi: cells per square inch-Zellenanzahl an der Stirnfläche des Katalysators) und den bereits oben beschriebenen Katalysatorvolumina eingesetzt werden. Dabei begrenzt der ansteigende Gegendruck (Druckverlust über den Katalysator) die Katalysatorzellenzahl auf höchstens 800 cpsi für eine Anwendung in einem Ammoniakgasgenerator. Besonders bevorzugt sind solche Katalysatoren, insbesondere Hydrolysekatalysatoren, die eine Katalysatorzellenzahl von 100 bis 600 cpsi pro inch² Stirnfläche, von 100 bis 500 cpsi pro inch² Stirnfläche und ganz besonders bevorzugt von 100 bis 400 cpsi pro inch² Stirnfläche des Katalysators aufweisen.

Hinsichtlich der Ausgestaltung der Katalysatoreinheit hat sich in den Testungen herausgestellt, dass eine zylindrische Bauform besonders gut geeignet ist. Hierbei kann der tangentiale Trägergasstrom seine volle Wirkung entfalten. Andere Bauformen sind hingegen weniger geeignet, da hierbei eine zu starke Verwirbelung zu beobachten ist. Somit ist auch ein Ammoniakgasgenerator Gegenstand der vorliegenden Erfindung, der eine Katalysatoreinheit umfasst, die in Form eines Zylinders ausgebildet ist.

Darüber hinaus hat sich als besonders vorteilhaft erwiesen, wenn der Ammoniakgasgenerator eine Katalysatoreinheit umfasst, die ihrerseits mindestens eine thermische Isolationsschicht, insbesondere eine thermische Isolationsschicht aus mikroporösem Dämmmaterial aufweist.

Als Ammoniakvorläufersubstanzen werden gemäß der vorliegenden Erfindung chemische Substanzen verstanden, die in eine Lösung überführt werden können und die Ammoniak mittels physikalischer und/oder chemischer Prozesse abspalten oder in sonstiger Form freisetzen können. Als Ammoniakvorläuferverbindungen können gemäß der vorliegenden Erfindung insbesondere Harnstoff, Harnstoffderivate, Guanidine, Biguanidine sowie Salze dieser Verbindungen sowie Salze des Ammoniaks eingesetzt werden. Insbesondere können gemäß der vorliegenden Erfindung Harnstoff und Guanidine oder Salze hiervon eingesetzt werden. Insbesondere können solche Salze eingesetzt werden, die aus Guanidinen und organischen oder anorganischen Säuren gebildet werden. Als besonders bevorzugt sind hierbei Guanidiniumsalze der allgemeinen Formel (I) anzusehen, 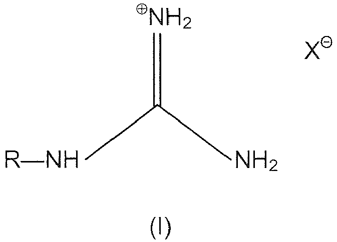 wobei
- R =: H, NH₂ oder C₁-C₁₂-Alkyl,
- X^{Θ} =: Acetat, Carbonat, Cyanat, Formiat, Hydroxid, Methylat oder Oxalat, bedeuten.

Besonders bevorzugt ist Guanidiniumformiat.

Im Rahmen der vorliegenden Erfindung können diese Guanidiniumsalze als Einzelsubstanz oder als Mischung aus zwei oder mehreren unterschiedlichen Guanidiniumsalzen verwendet werden. Gemäß einer bevorzugten Ausführungsform werden die erfindungsgemäß eingesetzten Guanidiniumsalze mit Harnstoff und/oder Ammoniak und/oder Ammoniumsalzen kombiniert. Alternativ können gemäß einer weiteren Ausführung der vorliegenden Erfindung jedoch auch wässrige Harnstofflösungen eingesetzt werden. Die Mischungsverhältnisse von Guanidiniumsalz mit Harnstoff sowie Ammoniak bzw. Ammoniumsalzen können in weiten Grenzen variiert werden. Es hat sich jedoch als besonders vorteilhaft erwiesen, wenn die Mischung von Guanidiniumsalz und Harnstoff einen Guanidiniumsalz-Gehalt von 5 bis 60 Gew.-% und einen Harnstoff-Gehalt von 5 bis 40 Gew.-%, insbesondere von 5 bis 35 Gew.-% besitzt. Des Weiteren sind Mischungen von Guanidiniumsalzen und Ammoniak bzw. Ammoniumsalzen mit einen Gehalt an Guanidiniumsalz von 5 bis 60 Gew.-% und von Ammoniak bzw. Ammoniumsalz von 5 bis 40 Gew.-% als bevorzugt anzusehen. Alternativ kann jedoch auch eine Harnstoff-Lösung insbesondere eine wässrige Harnstofflösung verwendet werden.

Als Ammoniumsalze haben sich hierbei vor allem Verbindungen der allgemeinen Formel (II) bewährt

R-NH₃^{⊕} X^{Θ} (II)

wobei
- R =: H, NH₂ oder C₁-C₁₂-Alkyl,
- X^{Θ} =: Acetat, Carbonat, Cyanat, Formiat, Hydroxid, Methylat oder Oxalat bedeuten.

Die erfindungsgemäß eingesetzten Ammoniakvorläufersubstanzen, insbesondere Guanidiniumsalze sowie ggf. die weiteren Komponenten, bestehend aus Harnstoff bzw. Ammoniumsalzen kommen in Form einer Lösung zum Einsatz, wobei als Lösemittel vor allem Wasser und/oder ein C₁-C₄-Alkohol bevorzugt eingesetzt werden. Die wässrigen und/oder alkoholischen Lösungen weisen hierbei einen bevorzugten Feststoffgehalt von 5 bis 85 Gew.-%, insbesondere 30 bis 80 Gew.-%, auf.

Dabei hat sich überraschend gezeigt, dass gemäß der vorliegenden Erfindung sowohl wässrige Guanidinformiatlösung in der Konzentration von 20 bis 60 Gew.-%, als auch wässrige Harnstofflösung in der Konzentration von 25 bis 40 Gew.-% als auch wässrige Mischungen aus Guanidiniumformiat und HarnstoffLösungen, wobei Guanidiniumformiat und Harnstoff in einer Konzentration von 5 bis 60 Gew.-% Guanidiniumformiat und 5 bis 40 Gew.-% Harnstoff in der Mischung enthalten ist, besonders gut eingesetzt werden können.

Die wässrigen Lösung der Ammoniakvorläufersubstanzen, insbesondere der Guanidiniumsalze, der Gemische von Guanidiniumsalze oder der Guanidiniumsalze in Kombination mit Harnstoff in Wasser besitzen hierbei ein bevorzugtes Ammoniak-Bildungspotential von 0,2 bis 0,5 kg Ammoniak pro Liter Lösung, insbesondere 0,25 bis 0,35 kg Ammoniak pro Liter Lösung.

Gemäß einem weiteren Aspekt ist auch ein Verfahren zur Erzeugung von Ammoniak aus einer Lösung einer Ammoniak-Vorläufersubstanz mittels eines Ammoniakgasgenerators, insbesondere ein Verfahren zur kontinuierlichen Erzeugung von Ammoniak, weiterhin bevorzugt mittels eines hiermit beschriebenen Ammoniakgasgenerators, Gegenstand der vorliegenden Erfindung. Dieser Ammoniakgasgenerator umfasst eine Katalysatoreinheit, die ihrerseits einen Katalysator zur Zersetzung und/ oder Hydrolyse von Ammoniakvorläufersubstanzen in Ammoniak und eine dem Katalysator in Strömungsrichtung vorgelagerte Mischkammer umfasst, wobei der Katalysator ein Katalysatorvolumen V_{Kat} und die Mischkammer ein Mischkammervolumen V_{Misch} aufweist. Des Weiteren umfasst der Ammoniakgasgenerator eine Eindüsungsvorrichtung zur Einbringung der Lösung der Ammoniakvorläufersubstanz in die Mischkammer und einen Auslass für das gebildete Ammoniakgas. Erfindungswesentlich ist, dass in dem neuen Verfahren die Lösung der Ammoniak-Vorläufersubstanz getrennt von einem Trägergas in die Mischkammer eingebracht wird und das Trägergas tangential zur Lösung der Ammoniak-Vorläufersubstanz eingebracht wird. Der Ammoniakgasgenerator ist dadurch gekennzeichnet, dass die Katalysatoreinheit einen mindestens zweigeteilten Hydrolysekatalysator umfasst, dessen in Strömungsrichtung erster Teil in Form eines beheizten Katalysators ausgebildet ist, während der zweite Teil in Form eines nicht beheizten Katalysators ausgeführt ist, oder dass hintereinander zwei Hydrolysekatalysatoren angeordnet sind, wobei es sich bei dem ersten Hydrolysekatalysator um einen beheizten Katalysator und bei dem zweiten Hydrolysekatalysator um einen nicht beheizten Katalysator handelt.

Durch das getrennte Einbringen der Lösung der Ammoniakvorläufersubstanz von dem Trägergas ist eine gezielte Dosierung der benötigten Energiemenge bzw. des Wärmestroms für einen störungsfreien, kontinuierlichen Betrieb des Generators realisierbar. Es hat sich herausgestellt, dass durch eine ausreichende Energiemenge auf einem entsprechenden Temperaturniveau das Verfahren ohne die Entstehung unerwünschter Nebenprodukte realisiert werden kann. Eine vollständige Zersetzung der einsetzbaren Ammoniakvorläuferlösungen zu Ammoniak erfordert bei gegebener Menge bzw. Mengenstrom an Lösung eine entsprechende Menge bzw. Mengenstrom an Energie in Form von Wärme auf einem für die vollständige Zersetzung notwendigen Temperaturniveau. Das Temperaturniveau wird dabei vom verwendeten Hydrolysekatalysator bestimmt. Die überwiegend in das Verfahren eingebrachte Energie kommt vorzugsweise aus dem Trägergasstrom.

Erfindungsgemäß ist ein Ammoniakgasgenerator insbesondere dann technisch und wirtschaftlich zu betreiben, wenn die eingebrachte Energie für die Zersetzung der Ammoniakvorläuferlösung aus der Abwärme des Trägergases genutzt wird. Dabei korreliert die Trägergasmenge nicht automatisch mit der Dosiermenge der flüssigen Lösung, da die nutzbare Energiemenge des Trägergases mit der Temperatur variiert. Ein Trägergasstrom auf einem etwas geringeren Temperaturniveau, damit verbunden etwas geringerer Temperaturdifferenz zwischen Ein- und Ausgang im Ammoniakgasgenerator kann z.B. durch einen höheren Trägergasmassenstrom und damit höherem Wärmestromeintrag in den Generator ausgeglichen werden.

Es hat sich dabei herausgestellt, dass als Trägergas auch z.B. ein Teilstrom eines Abgases verwendet werden kann oder ein hiervon verschiedenes Trägergas wie beispielsweise ein Teilstrom der Motorladeluft, mittels Wärmetauscher vorkonditioniert auf ein entsprechendes Temperaturniveau. Sollte ein Teilstrom eines Abgases Verwendung finden, so hat sich als besonders vorteilhaft herausgestellt, wenn der Teilstrom weniger als 5 % des gesamten Abgases enthält. Gemäß einer Weiterführung kann jedoch auch vorgesehen sein, dass als Transportgas ein Teilstrom eingesetzt wird, der mindestens 0,1 % des gesamten Abgases enthält und weiterhin bevorzugt weniger als 4 % und ganz besonders bevorzugt weniger als 2 % des gesamten Abgases enthält.

Als Teilstrom des Abgases wird der prozentuale Anteil betrachtet, der als Massen-Prozent dem Hauptabgasstrom abgezweigt wird und als Transport- oder Trägergasstrom durch den Generator geleitet wird.

Grundsätzlich kann erfindungsgemäß jedes Gas als Trägergasstrom eingesetzt werden. Da der Trägergasstrom vorzugsweise eine Temperatur von 250 °C bis 550 °C aufweisen sollte, wird für eine gute Energieeffizienz vorzugsweise ein Gas verwendet, welches bereits erwärmt vorliegt, wie z.B. Ladeluft oder ein Teil des Abgasstroms. Es ist aber auch möglich, ein beliebiges Trägergas auf die gewünschte Temperatur zu erwärmen.

Gemäß einer weiteren vorteilhaften Ausführung des Verfahrens hat sich gezeigt, dass eine besonders hohe Effizienz des Verfahrens eingestellt werden kann, wenn die Lösung der Ammoniakvorläufersubstanz mit einem Druck von mindestens 0,5 bar und die Zerstäubungsluft mit einem Druck von 0,5 bis 2 bar eingedüst wird.

Gemäß einer weiterhin bevorzugten Ausführung kann insbesondere auch vorgesehen sein, dass die Lösung von dem Vorratsbehälter mittels einer Pumpe und einer Düse mit einem theoretischen Sprühwinkel α von 10 bis 40° in die Mischkammer eingesprüht wird.

Besonders vorteilhaft ist, wenn die Lösung der Ammoniakvorläufersubstanz besonders fein verteilt auf die Katalysatorstirnfläche auftrifft. Daher ist auch ein Verfahren zur Erzeugung von Ammoniak Gegenstand der Erfindung, in dem die Lösung der Ammoniakvorläufersubstanz in Form von Tröpfchen mit einem Tröpfchendurchmesser D₃₂ von kleiner als 25 µm auf die Stirnfläche des Katalysators aufgebracht wird. Gemäß der vorliegenden Erfindung ist hierbei weiterhin bevorzugt vorgesehen, dass die Düse Tröpfchen mit einem Tröpfchendurchmesser d₃₂ von kleiner als 20 µm und ganz besonders bevorzugt von kleiner als 15 µm erzeugt. Gleichzeitig oder unabhängig hiervon ist weiterhin bevorzugt, dass die Düse Tröpfchen mit einem Tröpfchendurchmesser d₃₂ von größer als 0,1 µm und insbesondere von größer als 1 µm erzeugt. Auch durch die Verwendung von solchen Düsen kann ein Ammoniakbildungsgrad von > 95 % (siehe oben) erreicht werden. Zudem kann eine besonders gleichmäßige Verteilung der Lösung auf die Katalysatorstirnfläche erfolgen.

Weiterhin als vorteilhaft hat sich gezeigt, wenn die Lösung der Ammoniakvorläufersubstanz senkrecht zur Katalysatoroberfläche in die Mischkammer eingesprüht wird. Unabhängig oder gleichzeitig hiervon kann dabei das Volumenverhältnis Trägergas zu Zerstäubungsluft bei 7:1 bis 10:1 liegen.

Als entscheidend für den störungsfreien und damit ablagerungsfreien Betrieb eines Ammoniakgasgenerators hat sich weiterhin herausgestellt, dass vorzugsweise eine bestimmte Menge an Lösung fein verteilt auf einer gegebenen Katalysatorstirnfläche in einem definierten Zeitraum (=Mengenfluss, Dosiermenge) ankommt. Das Auftreffen und der erste Kontakt mit dem vordersten Teil der Katalysatoreinheit (=Katalysatorstirnfläche) entscheidet maßgeblich über die vollständige Zersetzung des Ammoniakvorläufers.

Es hat sich weiterhin gezeigt, dass das Verhältnis aus Dosiermenge und Katalysatorstirnfläche vorzugsweise in einem Bereich von 0,17 bis 15 g/(h*cm²), insbesondere von 0,2 bis 15 g/ (h*cm²) liegt, sodass keine zu starke Abkühlung an der Katalysatorstirnfläche stattfindet und sich eine zu geringe Umsetzung zu Ammoniak einstellt. Die Stirnflächenbelastung ist hierbei definiert als Quotient aus dem Dosiermassenstrom an Ammoniakvorläuferlösung, der an der Katalysatorstirnfläche innerhalb einer Stunde ankommt, und der durch den Sprühkegel benetzten Katalysatorstirnfläche.

Damit ist gemäß einem weiteren Aspekt auch ein Verfahren Gegenstand der vorliegenden Erfindung, indem die Lösung der Ammoniakvorläufersubstanz derart in die Katalysatoreinheit eingebracht wird, dass die Stirnflächenbelastung des Katalysators von 0,17 bis 15 g/(h*cm²), insbesondere von 0,2 bis 15 g/(h*cm²), bevorzugt von 0,2 bis 12 g/ (h*cm²) beträgt. Besonders bevorzugt ist ein Verfahren in dem die Stirnflächenbelastung mindestens 0,4 g/ (h*cm²), mindestens 1,0 g/ (h*cm²), insbesondere mindestens 2,0 g/ (h*cm²), insbesondere mindestens 3,0 g/ (h*cm²) und ganz besonders bevorzugt mindestens 4,0 g/ (h*cm²) beträgt. Gleichzeitig oder unabhängig hiervon kann die Stirnflächenbelastung insbesondere höchstens 12,0 g/ (h*cm²), insbesondere höchstens 10,0 g/ (h*cm²), insbesondere höchstens 9,0 g/ (h*cm²) und ganz besonders bevorzugt höchstens 8,0 g/ (h*cm²) betragen.

Es hat sich herausgestellt, dass, wenn ein zu großer Massenstrom an Ammoniakvorläuferlösung auf die heiße Stirnfläche treffen würde, es dort durch die Aufheizung und Verdunstung der Flüssigkeit zu einer zu starken lokalen Abkühlung käme, in deren Folge eine vollständige Umsetzung nicht mehr gegeben ist. Messungen haben gezeigt, dass es bei zu hohen Dosiermengen an der Katalysatorstirnfläche und damit einer zu großen Stirnflächenbelastung zu einer Abkühlung an der benetzten Stirnfläche um weit über 100 K kommt und damit das Temperaturniveau für eine vollständige Zersetzung an der Katalysatorstirnfläche unterschritten wird und es zu spontanen Weiterreaktionen hin zu unerwünschten Nebenprodukten kommt.

Ist die Katalysatorstirnfläche zu groß gewählt und damit die Stirnflächenbelastung zu klein wird der Ammoniakgasgenerator unwirtschaftlich, da in diesem Fall mit einem zu großen Katalysator betrieben wird.

Aus weiteren umfangreichen Untersuchungen hat sich herausgestellt, dass neben einer definierten Menge an Ammoniakvorläuferlösung pro Katalysatorstirnfläche auch eine entsprechende Energiemenge bezogen auf die Menge der Ammoniakvorläuferlösung notwendig ist. Dabei hat sich überraschenderweise ergeben, dass die Gesamtenergiemenge für die vollständige, rückstandsfreie Umsetzung der Ammoniakvorläuferlösung in Ammoniak im Wesentlichen unabhängig ist von der eingesetzten Ammoniakvorläuferlösung. Lediglich der zudosierte Massenstrom der Lösung der Ammoniakvorläufersubstanz korreliert mit einem bestimmten Energiestrom in Form eines Enthalpiestroms (im Wesentlichen ein Wärmestrom). Es hat sich gezeigt, dass für den endothermen Vorgang der vollständigen Umwandlung der Ammoniakvorläuferlösung in Ammoniak eine definierte Energiemenge zur Verfügung stehen muss. Dabei hat sich ebenfalls ergeben, dass dabei nicht das Temperaturniveau zu berücksichtigen ist, bei dem diese Zersetzung abläuft. Es hat sich gezeigt, dass das erforderliche Temperaturniveau im Wesentlichen von den verwendeten Hydrolysekatalysatoren abhängt, die die notwendigen Zersetzungstemperaturen herabsetzen können, ohne dass sich dabei die Gesamtenergiemenge zur Zersetzung ändert.

Es hat sich in den Untersuchungen gezeigt, dass der zugeführte Wärmestrom sowohl aus einem heißen Gasstrom, z. B. heißes Abgas von einem Verbrennungsmotor als Transportgas, entnommen werden kann, als auch durch zusätzliche aktive Beheizung (elektrisch, Wärmetauscher, Wärmerohr oder andere Wärmeüberträger mittels Wärmeleitung oder Strahlung) in den Ammoniakgasgenerator eingeleitet werden kann.

Daraus ergibt sich erfindungsgemäß ein bevorzugter spezifischer Enthalpiestrom im Bereich von 8.000 - 50.000 kJ/kg. Hierbei ist der spezifische Enthalpiestrom definiert als Quotient aus in den Ammoniakgasgenerator geführtem Enthalpiestrom und dem Dosiermassentstrom an Ammoniakvorläuferlösung der zur Katalysatoreinheit pro Zeiteinheit geführt wird. Die notwendige Energie wird dabei hauptsächlich in Form von Wärme in den Generator eingetragen.

Für einen zu großen Dosiermassenstrom bei gegebenem Enthalpiestrom wird der spezifische Enthalpiestrom entsprechend dieser Erfindung unterschritten, da nicht ausreichend Energie der endothermen Reaktion zugeführt wird. Es kommt zu einer nicht ausreichenden Umsetzung des Ammoniakvoläufers und damit zu Ablagerungen bzw. Bildung von unerwünschten Nebenprodukten, die einen kontinuierlichen Generatorbetrieb unmöglich machen. Ebenso hat sich gezeigt, dass ein zu großer spezifischer Enthalpiestrom zu einer unnötigen Belastung des Ammoniakgasgenerators führt und damit zu einem unwirtschaftlichen Betrieb bzw. zu einer zu hohen Belastung der verwendeten Bauteile führt.

Somit ist auch ein Verfahren Gegenstand der vorliegenden Erfindung, in dem die Lösung der Ammoniakvorläufersubstanz und ein Trägergas in die Mischkammer eingebracht wird, wobei das Trägergas und gegebenenfalls eine zusätzliche Energiequelle in Summe einen spezifischen Enthalpiestrom von H_{TG} / m_{Precursor} von 8.000 - 50.000 kJ/kg (Enthalpiestrom bezogen auf den eingebrachten Massenstrom an Lösung) aufweist. Besonders bevorzugt ist ein Verfahren, in dem der spezifische Entalpiestrom mindestens 10.000 kJ/kg, insbesondere mindestens 12.000 kJ/kg und ganz besonders bevorzugt mindestens 15.000 kJ/kg beträgt. Gleichzeitig oder unabhängig hiervon kann vorgesehen sein, dass der spezifische Entalpiestrom höchstens 45.000 kJ/kg, insbesondere höchstens 40.000 kJ/kg und ganz besonders bevorzugt höchstens 35.000 kJ/kg beträgt.

Weitere Parameter, die vorzugsweise beim Betrieb des erfindungsgemäßen Ammoniakgasgenerators eingehalten werden, sind wie folgt
- Der Dosiermassenstrom der Lösung der Ammoniakvorläufersubstanz pro Stunde beträgt vorzugsweise von 50 g/h bis 280 g/h, insbesondere von 100 g/h bis 200 g/h.
- Der Massenstrom an Trägergas beträgt vorzugsweise 1 bis 10 kg/h, insbesondere 3 bis 7 kg/h.
- Der Massenstrom an Zerstäubungsluft beträgt vorzugsweise 0,14 bis 1,43 kg/h, insbesondere 0,5 bis 1 kg/h.
- Die Zusatzheizenergiemenge beträgt vorzugsweise von 0 bis 150 W, insbesondere 50 bis 100 W.
- Die Katalysatorstirnflächentemperatur wird vorzugsweise auf 280 bis 500 °C, insbesondere auf 300 bis 400 °C eingestellt.
- Die Katalysatorauslasstemperatur wird vorzugsweise auf 250 bis 450 °C, insbesondere auf 280 bis 380 °C eingestellt.
- Die Katalysatorraumgeschwindigkeit beträgt vorzugsweise 5.000 bis 30.000 1/h, insbesondere 10.000 bis 20.000 1/h.
- Der Dosierdruck der Flüssigkeit der Ammoniakvorläufersubstanz beträgt vorzugsweise 1 bis 8 bar, insbesondere 1,5 bis 3 bar.
- Die Katalysatorstirnflächenbelastung pro Stunde beträgt vorzugsweise 0,53 bis 3,45 g/(h x cm²), insbesondere 1 bis 2 g/(h x cm²).
- Der spezifische Enthalpiestrom beträgt vorzugsweise 8.000 bis 25.000 kJ/kg, insbesondere 10.000 bis 20.000 kJ/kg.

Die hierin beschriebenen Ammoniakgasgeneratoren sind aufgrund ihrer kompakten Bauweise besonders für den Einsatz in Industrieanlagen, in Verbrennungsmotoren wie beispielsweise Dieselmotoren und Benzinmotoren, sowie Gasmotoren geeignet. Daher umfasst der vorliegenden Erfindung auch die Verwendung eines Ammoniakgasgenerators gemäß der beschriebenen Art sowie die Verwendung des beschriebenen Verfahrens zur Reduktion von Stickoxiden in Abgasen aus Industrieanlagen, aus Verbrennungsmotoren wie beispielsweise Dieselmotoren und Benzinmotoren, sowie aus Gasmotoren.
Im Folgenden wird die vorliegende Erfindung anhand von Zeichnungen und zugehörigen Beispielen näher erläutert. Hierbei zeigt
- Figur 1:: eine schematische Ansicht eines ersten Ammoniakgasgenerators im axialen Querschnitt
- Figur 2:: ein schematischer Aufbau einer Abgasanlage in einem Fahrzeug
- Figur 3:: einen radialen Querschnitt der Mischkammer (Draufsicht) im Bereich der tangentialen Trägergasstromzuführung
- Figur 4:: ein Diagramm 1: Umsatz der Ammoniakvorläuferlösung in Ammoniak in Abhängigkeit von der Stirnflächenbelastung
- Figur 5:: ein Diagramm 2: Umsatz der Ammoniakvorläuferlösung in Ammoniak in Abhängigkeit des spezifischen Enthalpiestroms.

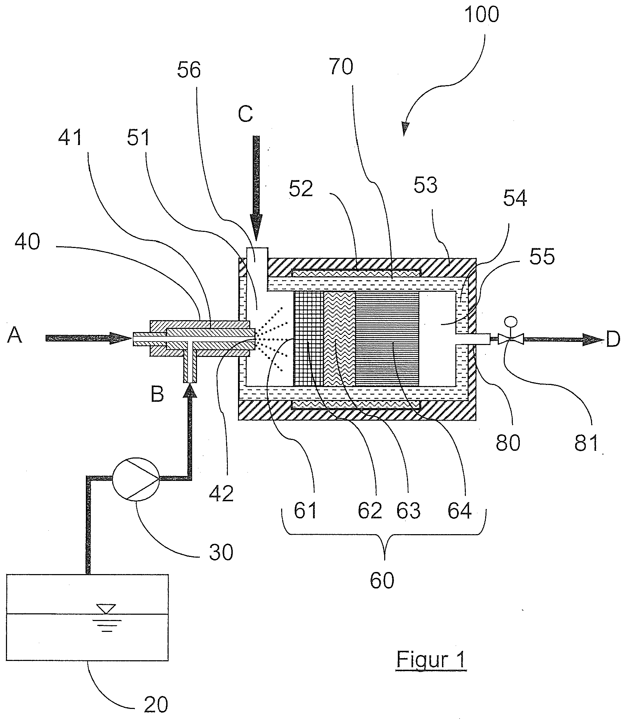

In Figur 1 ist ein erster Ammoniakgasgenerator (100) gemäß der vorliegenden Erfindung dargestellt. Der Generator (100) liegt in Form eines Zylinders vor und umfasst eine Eindüsungsvorrichtung (40), eine Katalysatoreinheit (70) und einen Auslass (80) für das gebildete Ammoniakgas. Die Katalysatoreinheit (70) besteht aus einem mehrteiligen Hydrolysekatalysator (60), einer Mischkammer (51) und einer Austrittskammer (55). Im Betriebszustand wird die Ammoniakvorläuferlösung (B) aus einem Vorratsbehälter (20) über eine Dosierpumpe (30) zusammen mit einem Zerstäubungsluftstrom (A) über eine Zweistoffdüse (41) mit Düsenöffnung (42) in die Mischkammer (51) des Ammoniakgasgenerators (100) mit einem definierten Sprühwinkel eingesprüht und in feine Tröpfchen verteilt. Zusätzlich wird ein heißer Transportgasstrom (C) tangential über den Einlass (56) in die Mischkammer (51) eingeleitet, wodurch eine Wirbelschleierströmung mit den Tröpfchen erzeugt wird, die axial in Richtung des Hydrolysekatalysators (60) auf die Hydrolysekatalysatorstirnfläche (61) geführt wird. Der Katalysator (60) ist derart ausgeführt, dass das erste Segment (62) einen elektrisch heizbaren Metallträger mit Hydrolysebeschichtung darstellt. Anschließend folgen ein nichtbeheizter Metallträgerkatalysator (63) ebenfalls mit Hydrolysebeschichtung und ein nichtbeheizter Katalysator (64) mit Hydrolysebeschichtung als Mischerstruktur ausgeführt zur besseren radialen Verteilung. Das erzeugte Ammoniakgas (D) verlässt zusammen mit dem heißen Trägergasstrom den Generator (100) über die Auslasskammer (55) mit dem Auslass (80) und Ventil (81). Der Generator kann durch eine Mantelheizung (52) um das Gehäuse (54) der Katalysatoreinheit zusätzlich beheizt werden. Bis auf den Kopfbereich in dem sich die Eindüsungsvorrichtung (40) befindet, ist der Ammoniakgasgenerator (100) mit einer Wärmeisolierung (53) aus mikroporösem Dämmmaterial umgeben.

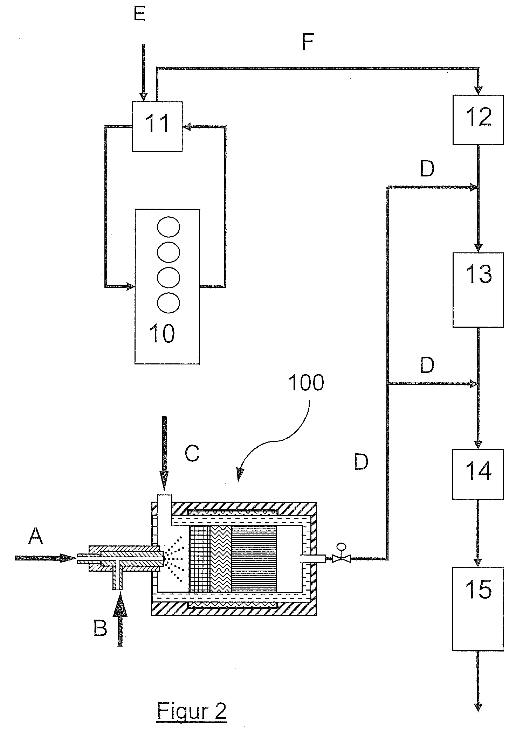

In Figur 2 wird ein schematischer Stoffstrom einer Abgasnachbehandlung an einem Verbrennungsmotor (10) dargestellt. Dabei wird das vom Verbrennungsmotor (10) kommende Abgas über eine Aufladeeinheit (11) geführt und im Gegenstrom Zuluft (E) für die Verbrennungskraftmaschine verdichtet. Das Abgas (F) wird über einen Oxidationskatalysator (12) geführt, um eine höhere NO₂-Konzentration im Verhältnis zu NO zu erreichen. Der aus dem Ammoniakgasgenerator (100) kommende ammoniakhaltige Gasstrom (D) kann sowohl vor als auch nach einem Partikelfilter (13) zugegeben und eingemischt werden. Dabei kann ein zusätzlicher Gasmischer (14) in Form eines statischen Mischers oder z.B. eines Venturimischers verwendet werden. Am SCR-Katalysator (15) erfolgt die Reduzierung der NOx mit Hilfe des Reduktionsmittels NH₃ an einem SCR-Katalysator (SCR = selective catalytic reduction). Dabei kann der Ammoniakgasgenerator mit separatem Trägergas oder auch mit einem Abgasteilstrom betrieben werden.

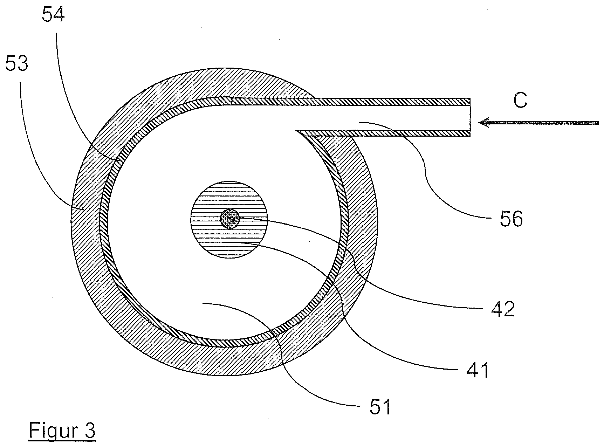

In Figur 3 ist eine Detailansicht der Mischkammer (51) im Bereich der tangentialen Trägergasstromzuführung gezeigt. Das Gehäuse (54) der Katalysatoreinheit ist im Bereich der Mischkammer (51) mit einer Wärmeisolierung (53) aus mikroporösem Dämmmaterial umgeben. Die tangentiale Zuführung des Trägergases (C) erfolgt im Kopfbereich des Ammoniakgasgenerators bzw. im Kopfbereich der Mischkammer (51), in Höhe der Düsenöffnung (42) der Düse (41). Dabei ist der Einlass (56) für den Trägergasstrom (C) derart gestaltet, dass der Trägergasstrom möglichst flach an der Wandung (54) der Mischkammer in der Art eingeleitet ist, dass sich eine abwärtsgerichtete Wirbelströmung im Generator in Richtung Katalysator und somit ein tangentialer Trägergasstrom innerhalb der Katalysatoreinheit einstellt.

### Ausführungsbeispiel 1:

Der Aufbau entspricht prinzipiell dem mit Figur 1 wiedergegebenen Ammoniakgasgenerator. Der Ammoniakgasgenerator ist ausgelegt für eine Dosiermenge von 10 - 100 g/h NH₃ und als zylindrischer Rohrreaktor ausgeführt. Im Kopfbereich befindet sich mittig angeordnet eine Zweistoffdüse der Firma Schlick Modell 970, (0,3mm) mit variabler Luftkappe, beschichtet mit amorphem Si. Die Ammoniakvorläufersubstanz wird mit Raumtemperatur durch diese Düse eindosiert und in einem Vollkegel zerstäubt. Der Sprühwinkel α beträgt 30 °. Der Abstand der Düsenöffnung von der Katalysatorstirnfläche beträgt 100 mm und der Spraykopfkegeldurchmesser 54 mm.

Die Flüssigkeit wird dabei mittels eines durch die Düse geführten Druckluftstroms (0,5 - 2 bar) von etwa 0,8 kg/h mitgerissen und zerstäubt. Der Sauterdurchmesser der entstehenden Tröpfchen unterhalb der Düse liegt bei < 25 µm. Es erfolgt eine gleichmäßige radiale Verteilung der Lösung der Ammoniakvorläufersubstanz über den Reaktorquerschnitt im heißen Transportgasstrom vor dem Hydrolysekatalysator in einer Mischkammer, ohne dass diese dabei die Reaktorwand berühren, was zu Ablagerungen führen könnte. In der Mischkammer erfolgt bereits eine Tropfenverdunstung in der Art, dass beim Auftreffen auf die Katalysatorstirnfläche der Tropfendurchmesser um bis zu 20 % reduziert ist. Durch die noch vorhandenen Tröpfchen kommt es an der Katalysatorstirnfläche zu einer Abkühlung von etwa 120 - 150 °C. Aus diesem Grund ist der Reaktor derart ausgeführt, dass die mit dem heißen Transportgasstrom zugeführte Wärmemenge, der integrierte heizbare Hydrolysekatalysator und weitere Energiezuführungen soviel Energie einbringen, dass für die dosierte Menge Lösung keine Abkühlung unter ca. 300 °C stattfindet. Die Dosiermenge von 50 - 280 g/h wird dabei über ein Bosch PWM-Ventil gesteuert. Der Druck für die Förderung der Flüssigkeit wird mittels Überdruck aus einer Druckluftleitung in einem Vorlagebehälter erzeugt, weshalb keine zusätzliche Förderpumpe benötigt wird.

Ein heißer Trägergasstrom (Transportgasstrom) von etwa 1 - 5 kg/h wird tangential ebenfalls im Kopfbereich des Ammoniakgasgenerators derart eingeleitet, dass er sich in einer Schleierströmung um die Reaktorwand legt und spiralförmig durch die Mischkammer geleitet wird. Dadurch wird verhindert, dass versprühte Tröpfchen mit der Reaktorwand in Kontakt kommen. Der Durchmesser der Mischkammer im Kopfbereich des Reaktors beträgt 70 mm. Die Länge der Mischerkammer beträgt 110 mm. Die Mischkammer wird zusätzlich über einen elektrischen Widerstandsheizmantel von außen beheizt (Aufheizzeit max. 1 min.) - Modell Hewit 0,8 - 1 kW, 150 - 200 mm. Die Temperaturregelung erfolgt in Verbindung mit an der Katalysatorstirnfläche, im und nach dem Katalysator angeordneten Temperatursensoren (Typ K). Alle Außenflächen des Reaktors sind mit einer Isolierung Microtherm superG umgeben. Die Microtherm superG Schüttung ist dabei eingebettet zwischen Glasfasergewebe, das um den Reaktor gewickelt ist. Nur der Kopfbereich, in dem sich die Eindüsung der Lösung befindet ist zur besseren Wärmeableitung nicht isoliert. Die Oberflächen in der Mischkammer sind mit katalytisch aktiven TiO₂ washcoat (Anatas Struktur) beschichtet.

Im Anschluss an die Mischkammer ist ein beheizbarer Metallträgerkatalysator mit 55 mm Durchmesser und 400 cpsi angeflanscht (Emitec Emicat, maximale Leistung 1,5 kW, Volumen ca. 170 ml). Dieser ist als Hydrolysekatalysator ausgeführt, ebenfalls mit katalytisch aktivem TiO₂ (Anatas, washcoat ca. 100 g/l, Fa. Interkat / Südchemie) beschichtet und wird so geregelt, dass die Temperatur an der Katalysatorstirnfläche zwischen 300 und 400 °C liegt. Dabei wird lediglich soviel Energie zugeführt, dass die Abkühlung durch die Verdunstung der Tröpfchen kompensiert wird. Zur Erreichung einer Raumgeschwindigkeit von bis zu minimal 7.000 1/h wird ein weiterer Hydrolysekatalysator mit 400 cpsi nachgeschaltet, so dass sich ein Gesamtkatalysatorvolumen von etwa 330 ml ergibt.

Das am heißen Hydrolysekatalysator erzeugte Ammoniak strömt frei über die Auslasskammer im Fußbereich, zentral aus einer Auslassöffnung aus dem Reaktorendstück aus. Dabei wird der Auslassbereich vorzugsweise konisch geformt, um Wirbelbildung an Kanten und damit Ablagerungen von möglichen Rückständen zu vermeiden. Das Gasgemisch aus dem Ammoniakgasgenerator wird vorzugsweise mit einer Temperatur > 80 °C zur Vermeidung von Ammoniumcarbonatablagerungen dem motorischen Abgasstrom vor SCR-Katalysator zugeben und in diesem Abgasstrom homogen über einen statischen Mischer verteilt.

Als Material für alle metallischen Bauteile wird 1.4301 (V2A, DIN X 5 CrNi18-10) alternativ 1.4401 (V4A, DIN X 2 CrNiMo 17-12-2), 1.4767 oder auch andere abgaskatalysatortypische Fe-Cr-Al-Legierungen verwendet.

Dieser Generator wurde sowohl mit einer 60%-igen Guanidinformiat-Lösung betrieben als auch mit einer 32,5%-igen wässrigen Harnstofflösung und auch mit Mischungen aus beiden. Dabei sind die Ergebnisse dieser Ammoniakvorläuferlösungen in etwa identisch (+/-1 %).

Im Folgenden sind diejenigen Betriebsparameter aufgeführt, die beim Betrieb des Ammoniakgasgenerators eingehalten werden sollten.

**Tabelle 1: Übersicht über die weiteren Betriebsparameter**

| **Bezeichnung** | **Formel** | **Einheiten** | **Bereich** | | |
|---|---|---|---|---|---|
| | | | **von** | **mittel** | **bis** |
| Dosiermassenstrom der Lösung der Ammoniakvorläufersubstanz pro Stunde | m_{Red} | [g/ h] | 50 | 150 | 280 |
| Massenstrom Trägergas | m_{Abg} | [kg/ h] | 1 | 5 | 10 |
| Massenstrom Zerstäubungsluft | m_{Düse} | [kg/ h] | 0,14 | 0,71 | 1,43 |
| Zuheizenergiemenge | E_{Heiz} | [J/ S] = [W] | 0 | 70 | 150 |
| Katalysatorstirnflächentemperatur | Tₑᵢₙ | [°C] | 280 | 350 | 500 |
| Katalysatorauslasstemperatur | Tₐᵤₛ | [°C] | 250 | 320 | 450 |
| Katalysatorraumgeschwindigkeit | RG | [1/ h] | 5.000 | 15.000 | 30.000 |
| Dosierdruck der Flüssigkeit | P_{Red} | [bar] | 1 | 2 | 8 |
| Katalysatorstirnflächenbelastung pro Stunde | m_{Red} / Aₖₐₜ | [g/ (h*cm²)] | 0,53 | 1,59 | 3,45 |
| spezifischer Enthalpiestrom | H_{TG}/ m_{Red} | [kJ/ kg] | 8.000 | 16.000 | 25.000 |

Durch den Einlass, der einen tangentialen Trägergasstrom im Bezug auf die in die Mischkammer eingedüste Lösung erzeugt, und das getrennte Einbringen der Lösung und des Trägergases konnte verhindert werden, dass sich auch über einen Zeitraum von > 100 Stunden keine Ablagerungen an der Katalysatorstirnfläche oder der Mischkammerwand bilden. Somit ist der Generator und das Verfahren als wartungsarm einzustufen.

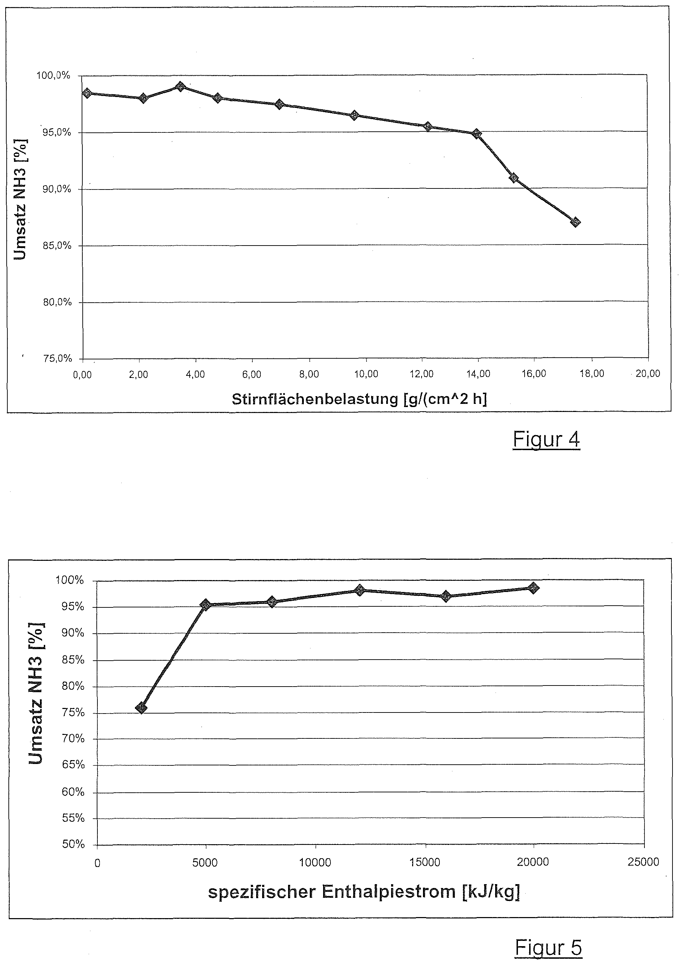

Im Folgenden wird der Einfluss der Stirnflächenbelastung und des spezifischen Enthalpiestroms auf die kontinuierliche Erzeugung von Ammoniak aufgeführt, wobei der mit Beispiel 1 verwendete Ammoniakgasgenerator verwendet wurde. Dieser Generator wurde sowohl mit einer 60%-igen Guanidinformiat-Lösung betrieben als auch mit einer 32,5%-igen wässrigen Harnstofflösung und auch mit Mischungen aus beiden. Dabei sind die Ergebnisse dieser Ammoniakvorläuferlösungen in etwa identisch (+/-1%). Die Bildung von Ammoniak in Abhängigkeit von der Stirnflächenbelastung ist mit Figur 4 wiedergegeben.

**Tabelle 2: Verfahren in Abhängigkeit von der Stirnflächenbelastung**

| | **V1** | **V2** | **V3** | **V4** | **V5** |
|---|---|---|---|---|---|
| Abstand Düsenöffnung bis Katalysatorstirnfläche [mm] | 100 | 100 | 100 | 100 | 100 |
| Spraykegeldurchmesser [mm] | 54 | 54 | 54 | 54 | 54 |
| Dosiermassenstrom der Lösung der Ammoniakvorläufersubstanz pro Stunde [g/ h] | 50 | 160 | 280 | 4 | 400 |
| Katalysatorstirnflächenbelastung pro Stunde [g/ (h*cm²)] | 2,1 | 7,0 | 12,0 | 0,17 | 17,5 |
| spezifischer Enthalpiestrom | 8000 | 12000 | 16000 | 16000 | 16000 |
| Ammoniakbildungsgrad AG [%] | ≥95% | ≥95% | ≥95% | ≥95% | < 90% |
| Ablagerungen an Katalysatorstirnfläche | keine | keine | keine | keine | ja |
| Ablagerungen an der Mischwandkammer | keine | keine | keine | keine | keine |

Durch Einstellung der Katalysatorstirnflächenbelastung auf mind. 0,17 g/ (h*cm²) (vgl. V4), kann ein Verfahren bereit gestellt werden, in dem auch über einen Zeitraum von > 100 h keine Ablagerungen gebildet werden. Auch wenn die Stirnflächenbelastung 2,1 g/(h*cm²) oder 7,0 g/(h*cm²) oder 12,0 g/(h*cm²) über einen Zeitraum von > 100 h beträgt, werden keine Ablagerungen beobachtet, wodurch ein kontinuierliches Verfahren sichergestellt ist. Wird die Stirnflächenbelastung auf einen Wert von 17,5 g/(h*cm²) (vgl. V5) eingestellt, so sind Ablagerungen an der Katalysatorstirnfläche zu beobachten. Ein kontinuierliches Verfahren ist somit nicht mehr möglich.

**Tabelle 3: Verfahren in Abhängigkeit vom spezifischen Enthalpiestrom**

| | **V1** | **V2** | **V3** | **V4** | **V5** |
|---|---|---|---|---|---|
| Abstand Düsenöffnung bis Katalvsatorstirnfläche [mm] | 100 | 100 | 100 | 100 | 100 |
| Spraykegeldurchmesser [mm] | 54 | 54 | 54 | 54 | 54 |
| Dosiermassenstrom der Lösung der Ammoniakvorläufersubstanz pro Stunde [g/ hl | 160 | 160 | 160 | 160 | 160 |
| Katalysatorstirnflächenbelastung pro Stunde [g/ (h*cm²)] | 7,0 | 7,0 | 7,0 | 7,0 | 7,0 |
| spezifischer Enthalpiestrom [kJ/ kg] | 8.000 | 12.000 | 16.000 | 2.000 | 20.000 |
| Ammoniakbildungsgrad AG [%] | ≥95% | ≥95% | ≥95% | < 90% | ≥0:95% |
| Ablagerungen an Katalysatorstirnfläche | keine | keine | keine | ja | keine |
| Ablagerungen an der Mischwandkammer | keine | keine | keine | ja | keine |

Durch Einstellung der spezifischen Enthalpie auf mind. 8.000 kJ/ kg (vgl. V1, V2, V3 und V5) kann ein Verfahren bereit gestellt werden, in dem auch über einen Zeitraum von > 100 h keine Ablagerungen gebildet werden, wodurch ein kontinuierliches Verfahren bereitgestellt werden kann. Wird die spezifische Enthalpie auf 2.000 kJ/ kg (vgl. V4) eingestellt, so sind Ablagerungen an der Mischkammerwand und der Katalysatorstirnfläche zu beobachten. Die Bildung von Ammoniak in Abhängigkeit vom spezifischen Enthalpiestrom ist mit Figur 5 wiedergegeben.

### Ausführungsbeispiel 2:

In Ausführungsbeispiel 2 ist der Reaktor derart ausgeführt, dass der Reaktor zum Teil durch Gegenstromwärmetausch von dem zugeführten, heißen Transportgasstrom mitbeheizt wird. Dabei wird der Transportgasstrom zunächst unterhalb des Reaktorkopfes über einen Doppelmantel entgegen der Strömungsrichtung im inneren des Doppelmantels an die Reaktorwand geführt und umströmt diese auf dem Weg zum Reaktorkopf. Am Reaktorkopf tritt die Hauptströmung aus dem Reaktordoppelmantel über mehrere Bohrungen oder alternativ über einen Ringspalt im Bereich der Düse am Reaktorkopf in das Reaktorinnere ein. Zusätzlich kann sich im Doppelmantel eine elektrische Widerstandsheizung befinden.

### Ausführungsbeispiel 3:

In Ausführungsbeispiel 3 ist der Reaktor derart ausgeführt, dass die Beheizung des Reaktors von außen nicht über eine elektrische Widerstandsheizung erfolgt sondern über Wärmeaustausch mit heißen Bauteilen eines Verbrennungsmotors, separaten Brenners zur Abgasbeheizung oder heißen Gasströmen. Dabei kann auch die Wärme über Wärmerohr über gewisse Distanz zum Reaktor transportiert werden.

### Ausführungsbeispiel 4:

In Ausführungsbeispiel 4 ist der Reaktor derart ausgeführt, dass keine Beheizung des Reaktors von außen erfolgt sondern über Wärme über einen elektrisch beheizbaren Katalysator Emikat von Fa. Emitec direkt im inneren des Reaktors zugeführt wird. Alternativ kann Wärme im Reaktor durch Glühkerzen Modell Champion (60W, 11V) erzeugt werden.

### Ausführungsbeispiel 5:

Mit Vorheizung der flüssigen Lösung der Ammoniakvorläufersubstanz - bei Verwendung eines Injektors mit kritischer Überhitzung (flash-Verdampfer).

## Patentansprüche

1. Ammoniakgasgenerator (100) zur Erzeugung von Ammoniak aus einer Lösung einer Ammoniakvorläufersubstanz umfassend
- eine Katalysatoreinheit (70), die einen Katalysator (60) zur Zersetzung und/ oder Hydrolyse von Ammoniakvorläufersubstanzen in Ammoniak und eine dem Katalysator (60) in Strömungsrichtung vorgelagerte Mischkammer (51) umfasst, wobei der Katalysator (60) ein Katalysatorvolumen V_{Kat} und die Mischkammer (51) ein Mischkammervolumen V_{Misch} aufweist,
- eine Eindüsungsvorrichtung (40) zur Einbringung der Lösung der Ammoniakvorläufersubstanz in die Mischkammer (51) und
- einen Auslass (80) für das gebildete Ammoniakgas,
wobei
der Ammoniakgasgenerator einen Einlass (56) für ein Trägergas umfasst, der einen tangentialen Trägergasstrom in Bezug auf die in die Mischkammer (51) eingedüste Lösung erzeugt,
**dadurch gekennzeichnet,**
**dass** die Katalysatoreinheit (70) einen mindestens zweigeteilten Hydrolysekatalysator umfasst, dessen in Strömungsrichtung erster Teil in Form eines beheizten Katalysators ausgebildet ist, während der zweite Teil in Form eines nicht beheizten Katalysators ausgeführt ist, oder dass hintereinander zwei Hydrolysekatalysatoren angeordnet sind, wobei es sich bei dem ersten Hydrolysekatalysator um einen beheizten Katalysator und bei dem zweiten Hydrolysekatalysator um einen nicht beheizten Katalysator handelt.

2. Ammoniakgasgenerator (100) nach mindestens einem der vorgenannten Ansprüche, **dadurch gekennzeichnet, dass** die Katalysatoreinheit (70) in Form eines Zylinders ausgebildet ist.

3. Ammoniakgasgeneratoren nach mindestens einem der vorgenannten Ansprüche, **dadurch gekennzeichnet, dass** das Verhältnis Durchmesser D des Katalysators (60) zur Länge L der Katalysators bei 1 : 3 liegt.

4. Ammoniakgasgenerator nach Anspruch 1, **dadurch gekennzeichnet, dass** die Eindüsungsvorrichtung (40) eine Düse (41) umfasst, die eine erste Anzahl an Düsenöffnungen zur Einbringung der Lösung in die Katalysatoreinheit (70) aufweist, die von einer zweiten Anzahl an Düsenöffnungen zur Einbringung einer Zerstäubungsluft in die Katalysatoreinheit (70) ringförmig umgeben ist.

5. Ammoniakgasgeneratoren nach mindestens einem der vorgenannten Ansprüche, **dadurch gekennzeichnet, dass** der Katalysator (60) ein Hydrolysekatalysator (62, 63) mit einer Katalysatorzellenanzahl von mindestens 100 cpsi bis höchstens 400 cpsi Katalysatorzellen pro Stirnfläche des Hydrolysekatalysators ist.

6. Ammoniakgasgenerator (100) nach mindestens einem der vorgenannten Ansprüche, **dadurch gekennzeichnet, dass** der Katalysator (60) eine katalytisch aktive Beschichtung aufweist, die mit Gold und/oder Palladium imprägniert ist.

7. Ammoniakgasgenerator nach mindestens einem der vorgenannten Ansprüche, **dadurch gekennzeichnet, dass** die Katalysatoreinheit (70) einen mindestens zweigeteilten Hydrolysekatalysator umfasst, dessen in Strömungsrichtung erster Teil in Form eines beheizten Katalysators mit direkter elektrischer Widerstandsheizung und mit Mantelheizung ausgebildet ist, während der zweite Teil in Form eines nicht beheizten Katalysators ausgeführt ist, dem stromab ein nicht beheizter Katalysator mit Mischerstruktur folgt.

8. Ammoniakgasgeneratoren (100) nach mindestens einem der vorgenannten Ansprüche, **dadurch gekennzeichnet, dass** die Katalysatoreinheit (70) mindestens eine thermische Isolationsschicht (53) aus mikroporösem Dämmmaterial aufweist.

9. Verfahren zur Erzeugung von Ammoniak aus einer Lösung einer Ammoniak-Vorläufersubstanz mittels eines Ammoniakgasgenerators (100) umfassend
- eine Katalysatoreinheit (70), die einen Katalysator (60) zur Zersetzung und/ oder Hydrolyse von Ammoniakvorläufersubstanzen in Ammoniak und eine dem Katalysator (60) in Strömungsrichtung vorgelagerte Mischkammer umfasst, wobei der Katalysator ein Katalysatorvolumen V_{Kat} und die Mischkammer ein Mischkammervolumen V_{Misch} aufweist,
- eine Eindüsungsvorrichtung (40) zur Einbringung der Lösung der Ammoniakvorläufersubstanz in die Mischkammer (51),
- einen Auslass (80) für das gebildete Ammoniakgas,
wobei die Lösung der Ammoniak-Vorläufersubstanz getrennt von einem Trägergas in die Mischkammer (51) eingebracht wird und das Trägergas tangential zur Lösung der Ammoniak-Vorläufersubstanz eingebracht wird, **dadurch gekennzeichnet,**
**dass** die Katalysatoreinheit (70) einen mindestens zweigeteilten Hydrolysekatalysator umfasst, dessen in Strömungsrichtung erster Teil in Form eines beheizten Katalysators ausgebildet ist, während der zweite Teil in Form eines nicht beheizten Katalysators ausgeführt ist, oder dass hintereinander zwei Hydrolysekatalysatoren angeordnet sind, wobei es sich bei dem ersten Hydrolysekatalysator um einen beheizten Katalysator und bei dem zweiten Hydrolysekatalysator um einen nicht beheizten Katalysator handelt.

10. Verfahren nach mindestens einem der vorgenannten Ansprüche, **dadurch gekennzeichnet, dass** als Trägergas ein Teilstrom eines Abgases verwendet wird, der weniger als 5 % des gesamten Abgases enthält.

11. Verfahren nach mindestens einem der vorgenannten Ansprüche, **dadurch gekennzeichnet, dass** die Lösung von dem Vorratsbehälter (20) mittels einer Pumpe (30) mit einem Sprühwinkel von 10 bis 40° in die Mischkammer (51) eingesprüht wird.

12. Verfahren nach mindestens einem der vorgenannten Ansprüche, **dadurch gekennzeichnet, dass** die Lösung in Form von Tröpfchen mit einem Tröpfchendurchmesser D₃₂ von kleiner als 20 µm auf die Stirnfläche (61) des Katalysators (60) aufgebracht wird.

13. Verfahren nach mindestens einem der vorgenannten Ansprüche, **dadurch gekennzeichnet, dass** das Verhältnis Trägergas zu Zerstäubungsluft bei 7 : 1 bis 10 : 1 liegt.

14. Verfahren nach mindestens einem der vorgenannten Ansprüche, **dadurch gekennzeichnet, dass** die Lösung mit einem Druck von mindestens 0,5 bar und die Zerstäubungsluft mit einem Druck von 0,5 bis 2 bar eingedüst wird.

15. Verfahren nach mindestens einem der vorgenannten Ansprüche, **dadurch gekennzeichnet, dass** die Lösung derart in die Katalysatoreinheit (70) eingebracht wird, dass die Stirnflächenbelastung des Katalysators 0,2 bis 12 g/ (h*cm²) beträgt.

16. Verfahren nach mindestens einem der vorgenannten Ansprüche, **dadurch gekennzeichnet, dass** die Lösung senkrecht zur Katalysatoroberfläche in die Mischkammer (51) eingesprüht wird.

17. Verfahren nach mindestens einem der vorgenannten Ansprüche, **dadurch gekennzeichnet, dass** die Lösung zusammen mit einem Trägergas in die Mischkammer (51) eingebracht wird, wobei das Trägergas und ggf. eine zusätzliche Energiequelle in Summe einen spezifischen Enthalpiestrom von H_{TG} / m_{Precursor} von 8.000 - 50.000 kJ/kg (Enthalpiestrom bezogen auf den eingebrachten Massenstrom an Lösung) aufweist.

18. Verwendung eines Ammoniakgasgenerators (100) nach mindestens einem der vorgenannten Ansprüche oder eines Verfahrens nach mindestens einem der vorgenannten Ansprüche zur Reduktion von Stickoxiden in Abgasen aus Industrieanlagen, aus Verbrennungsmotoren, aus Gasmotoren, aus Dieselmotoren oder aus Benzinmotoren.

## Claims

1. Ammonia gas generator (100) for producing ammonia from a solution of an ammonia precursor substance, comprising:
- a catalyst unit (70) which comprises a catalyst (60) for decomposing and/or hydrolysing ammonia precursor substances into ammonia, and a mixing chamber (51) upstream of the catalyst (60) in the flow direction, the catalyst (60) having a catalyst volume V_{Kat} and the mixing chamber (51) having a mixing chamber volume V_{Misch},
- an injection device (40) for introducing the solution of the ammonia precursor substance into the mixing chamber (51), and
- an outlet (80) for the ammonia gas formed,
the ammonia gas generator comprising an inlet (56) for a carrier gas which produces a tangential carrier gas stream with respect to the solution injected into the mixing chamber (51),
**characterised in that**,
the catalyst unit (70) comprises a hydrolysis catalyst which is divided into at least two parts, the first part of which in the flow direction is in the form of a heated catalyst, while the second part is in the form of an unheated catalyst, or **in that** two hydrolysis catalysts are arranged one behind the other, the first hydrolysis catalyst being a heated catalyst and the second hydrolysis catalyst being an unheated catalyst.

2. Ammonia gas generator (100) according to at least one of the preceding claims, **characterised in that** the catalyst unit (70) is cylindrical.

3. Ammonia gas generator according to at least one of the preceding claims, **characterised in that** the ratio of the diameter D of the catalyst (60) to the length L of the catalyst is 1:3.

4. Ammonia gas generator according to claim 1, **characterised in that** the injection device (40) comprises a nozzle (41) which has a first number of nozzle openings for introducing the solution into the catalyst unit (70), which first number of nozzle openings is annularly surrounded by a second number of nozzle openings for introducing atomising air into the catalyst unit (70).

5. Ammonia gas generators according to at least one of the preceding claims, **characterised in that** the catalyst (60) is a hydrolysis catalyst (62, 63) having a catalyst cell count of at least 100 cpsi to at most 400 cpsi catalyst cells for each end face of the hydrolysis catalyst.

6. Ammonia gas generator (100) according to at least one of the preceding claims, **characterised in that** the catalyst (60) has a catalytically active coating which is impregnated with gold and/or palladium.

7. Ammonia gas generator according to at least one of the preceding claims, **characterised in that** the catalyst unit (70) comprises a hydrolysis catalyst that is divided into at least two parts, the first part of which in the flow direction is in the form of a heated catalyst that has direct electrical resistance heating and jacket heating, while the second part is in the form of an unheated catalyst which is followed downstream by an unheated catalyst that has a mixer structure.

8. Ammonia gas generators (100) according to at least one of the preceding claims, **characterised in that** the catalyst unit (70) comprises at least one thermal insulation layer (53) made of microporous insulating material.

9. Method for producing ammonia from a solution of an ammonia precursor substance by means of an ammonia gas generator (100), comprising
- a catalyst unit (70) which comprises a catalyst (60) for decomposing
and/or hydrolysing ammonia precursor substances into ammonia, and a mixing chamber (51) upstream of the catalyst (60) in the flow direction, the catalyst having a catalyst volume V_{Kat} and the mixing chamber having a mixing chamber volume V_{Misch},
- an injection device (40) for introducing the solution of the ammonia precursor substance into the mixing chamber (51),
- an outlet (80) for the ammonia gas formed,
the solution of the ammonia precursor substance being introduced into the mixing chamber (51) separately from a carrier gas and the carrier gas being introduced tangentially to the solution of the ammonia precursor substance,
**characterised in that**
the catalyst unit (70) comprises a hydrolysis catalyst that is divided into at least two parts, the first part of which in the flow direction is in the form of a heated catalyst, while the second part is in the form of an unheated catalyst, or **in that** two hydrolysis catalysts are arranged one behind the other, the first hydrolysis catalyst being a heated catalyst and the second hydrolysis catalyst being an unheated catalyst.

10. Method according to at least one of the preceding claims, **characterised in that** a partial flow of an exhaust gas is used as the carrier gas, which partial flow contains less than 5 % of the entire exhaust gas.

11. Method according to at least one of the preceding claims, **characterised in that** the solution is sprayed from the storage container (20) into the mixing chamber (51) by means of a pump (30) at a spray angle of from 10 to 40°.

12. Method according to at least one of the preceding claims, **characterised in that** the solution is applied to the end face (61) of the catalyst (60) in the form of droplets having a droplet diameter D₃₂ of less than 20 µm.

13. Method according to at least one of the preceding claims, **characterised in that** the ratio of carrier gas to atomising air is from 7:1 to 10:1.

14. Method according to at least one of the preceding claims, **characterised in that** the solution is injected at a pressure of at least 0.5 bar and the atomising air is injected at a pressure of from 0.5 to 2 bar.

15. Method according to at least one of the preceding claims, **characterised in that** the solution is introduced into the catalyst unit (70) such that the end face load of the catalyst is from 0.2 to 12 g/(h*cm²).

16. Method according to at least one of the preceding claims, **characterised in that** the solution is injected into the mixing chamber (51) perpendicularly to the catalyst surface.

17. Method according to at least one of the preceding claims, **characterised in that** the solution is introduced into the mixing chamber (51) together with a carrier gas, the carrier gas and optionally an additional energy source having in total a specific enthalpy flow of H_{TG}/M_{Precursor} of 8,000 - 50,000 kJ/kg (enthalpy flow based on the mass flow of solution introduced).

18. Use of an ammonia gas generator (100) according to at least one of the preceding claims or of a method according to at least one of the preceding claims for reducing nitrogen oxides in exhaust gases from industrial plants, internal combustion engines, gas engines, diesel engines or petrol engines.

## Revendications

1. Générateur de gaz ammoniac (100) pour produire de l'ammoniac à partir d'une solution d'une substance formant un précurseur de l'ammoniac, comprenant
- une unité à catalyseur (70), qui comprend un catalyseur (60) pour la décomposition et/ou l'hydrolyse de substances formant des précurseurs de l'ammoniac en ammoniac et une chambre de mélange (51) installée en amont du catalyseur (60) dans le sens d'écoulement, dans lequel le catalyseur (60) présente un volume de catalyseur V_{cat} et la chambre de mélange (51) présente un volume de chambre de mélange V_{mél},
- un dispositif d'injection (40) pour introduire la solution de la substance formant un précurseur de l'ammoniac dans la chambre de mélange (51) ; et
- une sortie (80) pour le gaz ammoniac obtenu,
dans lequel le générateur de gaz ammoniac comprend une entrée (56) pour un gaz vecteur, qui produit un flux de gaz vecteur tangentiel par rapport à la solution injectée dans la chambre de mélange (51),
**caractérisé en ce que**
l'unité à catalyseur (70) comprend un catalyseur d'hydrolyse au moins en deux parties, dont la première partie est réalisée dans le sens d'écoulement sous la forme d'un catalyseur chauffé, tandis que la deuxième partie est configurée sous la forme d'un catalyseur non chauffé, ou **en ce que** deux catalyseurs d'hydrolyse sont disposés l'un derrière l'autre, le premier catalyseur d'hydrolyse étant un catalyseur chauffé et le deuxième catalyseur d'hydrolyse étant un catalyseur non chauffé.

2. Générateur de gaz ammoniac (100) selon au moins l'une quelconque des revendications précédentes, **caractérisé en ce que** l'unité à catalyseur (70) est réalisée sous la forme d'un cylindre.

3. Générateurs de gaz ammoniac selon au moins l'une quelconque des revendications précédentes, **caractérisés en ce que** le rapport entre le diamètre D du catalyseur (60) et la longueur L du catalyseur est de l'ordre de 1:3.

4. Générateur de gaz ammoniac selon la revendication 1, **caractérisé en ce que** le dispositif d'injection (40) comprend une buse (41), qui présente un premier nombre d'orifices de buse pour introduire la solution dans l'unité à catalyseur (70), qui est entourée de manière à présenter une forme annulaire par un deuxième nombre d'orifices de buse pour introduire un air d'atomisation dans l'unité à catalyseur (70).

5. Générateurs de gaz ammoniac selon au moins l'une quelconque des revendications précédentes, **caractérisés en ce que** le catalyseur (60) est un catalyseur d'hydrolyse (62, 63) avec un nombre de cellules d'hydrolyse d'au moins 100 cpsi à 400 cpsi au maximum de cellules de catalyseur par surface frontale du catalyseur d'hydrolyse.

6. Générateur de gaz ammoniac (100) selon au moins l'une quelconque des revendications précédentes, **caractérisé en ce que** le catalyseur (60) présente un revêtement catalytiquement actif, qui est imprégné d'or et/ou de palladium.

7. Générateur de gaz ammoniac selon au moins l'une quelconque des revendications précédentes, **caractérisé en ce que** l'unité à catalyseur (70) comprend un catalyseur d'hydrolyse au moins en deux parties, dont la première partie est réalisée dans le sens d'écoulement sous la forme d'un catalyseur chauffé avec un chauffage par résistance électrique directe et un chauffage de parois, tandis que la deuxième partie est configurée sous la forme d'un catalyseur non chauffé, qui est suivi en aval par un catalyseur non chauffé avec une structure mélangeuse.

8. Générateurs de gaz ammoniac (100) selon au moins l'une quelconque des revendications précédentes, **caractérisés en ce que** l'unité à catalyseur (70) présente au moins une couche d'isolation (53) thermique composée d'un matériau isolant microporeux.

9. Procédé pour produire de l'ammoniac à partir d'une solution d'une substance formant un précurseur de l'ammoniac au moyen d'un générateur de gaz ammoniac (100), comprenant
- une unité à catalyseur (70), qui comprend un catalyseur (60) pour la décomposition et/ou l'hydrolyse de substances formant des précurseurs de l'ammoniac en ammoniac et une chambre de mélange installée en amont du catalyseur (60) dans le sens d'écoulement, dans lequel le catalyseur présente un volume de catalyseur V_{cat} et la chambre de mélange présente un volume de chambre de mélange V_{mél},
- un dispositif d'injection (40) pour introduire la solution de la substance formant un précurseur de l'ammoniac dans la chambre de mélange (51),
- une sortie (80) pour le gaz ammoniac obtenu,
dans lequel la solution de la substance formant précurseur de l'ammoniac est introduite dans la chambre de mélange (51) de manière séparée d'un gaz vecteur, et le gaz vecteur est introduit de manière tangentielle par rapport à la solution de la substance formant précurseur de l'ammoniac,
**caractérisé en ce**
**que** l'unité à catalyseur (70) comprend un catalyseur d'hydrolyse au moins en deux parties, dont la première partie est réalisée dans le sens d'écoulement sous la forme d'un catalyseur chauffé, tandis que la deuxième partie est configurée sous la forme d'un catalyseur non chauffé, ou en ce que deux catalyseurs d'hydrolyse sont disposés l'un derrière l'autre, le premier catalyseur d'hydrolyse étant un catalyseur chauffé et le deuxième catalyseur d'hydrolyse étant un catalyseur non chauffé.

10. Procédé selon au moins l'une quelconque des revendications précédentes, **caractérisé en ce qu'**un flux partiel d'un gaz d'échappement est utilisé en tant que gaz vecteur, lequel flux partiel contient moins de 5 % de la totalité du gaz d'échappement.

11. Procédé selon au moins l'une quelconque des revendications précédentes, **caractérisé en ce que** la solution est injectée par le récipient formant réservoir (20) au moyen d'une pompe (30) selon un angle de pulvérisation allant de 10 à 40° dans la chambre de mélange (51).

12. Procédé selon au moins l'une quelconque des revendications précédentes, **caractérisé en ce que** la solution est appliquée sous la forme de gouttelettes présentant un diamètre de gouttelette D₃₂ inférieur à 20 µm sur la surface frontale (61) du catalyseur (60).

13. Procédé selon au moins l'une quelconque des revendications précédentes, **caractérisé en ce que** le rapport entre le gaz porteur et l'air d'atomisation va de 7:1 à 10:1 environ.

14. Procédé selon au moins l'une quelconque des revendications précédentes, **caractérisé en ce que** la solution est injectée avec une pression d'au moins 0,5 bar, et **en ce que** l'air d'atomisation est injecté avec une pression allant de 0,5 à 2 bar.

15. Procédé selon au moins l'une quelconque des revendications précédentes, **caractérisé en ce que** la solution est introduite dans l'unité à catalyseur (70) de telle manière que la capacité de charge de surface frontale du catalyseur présente une valeur de 0,2 à 12 g/(h*cm²).

16. Procédé selon au moins l'une quelconque des revendications précédentes, **caractérisé en ce que** la solution est injectée de manière perpendiculaire par rapport à la surface de catalyseur dans la chambre de mélange (51).

17. Procédé selon au moins l'une quelconque des revendications précédentes, **caractérisées en ce que** la solution est introduite conjointement avec un gaz vecteur dans la chambre de mélange (51), dans lequel le gaz vecteur et éventuellement une source d'énergie supplémentaire présentent en cumulé un flux d'enthalpie spécifique H_{TG} / m_{Précurseur} de 8 000 - 50 000 kJ/kg (flux d'enthalpie par rapport au flux massique introduit dans la solution).

18. Utilisation d'un générateur de gaz ammoniac (100) selon au moins l'une quelconque des revendications précédentes ou d'un procédé selon au moins l'une quelconque des revendications précédentes afin de réduire des oxydes d'azote dans des gaz d'échappement provenant d'installations industrielles, de moteurs à combustion interne, de moteurs à gaz, de moteurs Diesel ou de moteurs à essence.
